# EUROPEAN PATENT APPLICATION

(11) **EP 4 027 410 A1**
(43) Date of publication of application: **13.07.2022**
(21) Application number: 20860305.0
(22) Date of filing: 01.09.2020
(51) Int. Cl.: H01M 4/525, C01G 53/00, H01M 4/505

(54) **POSITIVE ELECTRODE ACTIVE MATERIAL FOR LITHIUM ION SECONDARY BATTERIES, METHOD FOR PRODUCING SAME, AND LITHIUM ION SECONDARY BATTERY**

(30) Priority: 06.09.2019 JP 2019162759
(71) Applicant: Hitachi Metals, Ltd., Minato-ku Tokyo 108-8224 (JP)
(72) Inventor: TOYAMA, Tatsuya, Tokyo 108-8224 (JP); TOKORO, Hisato, Tokyo 108-8224 (JP); TAKAHASHI, Shin, Tokyo 108-8224 (JP); GUNJI, Akira, Tokyo 108-8224 (JP); TAKANO, Shuichi, Tokyo 108-8224 (JP)
(74) Representative: Dennemeyer & Associates S.A.
(86) International application number: PCT/JP2020/032980
(87) International publication number: WO 2021/045025

(57) **Abstract**

A positive electrode active material for a lithium-ion secondary battery includes lithium transition metal composite oxide expressed by Composition Formula (1):
Li₁₊ₐNi_{b}Co_{c}M_{d}XₑO_{2+α} (1) [in which M represents at least one kind selected from Al and Mn, X represents one or more kinds of metal elements other than Li, Ni, Co, Al, and Mn, and a, b, c, d, e, and α are numerals satisfying -0.04 ≤ a ≤ 0.04, 0.80 ≤ b ≤ 1.0, 0 ≤ c ≤ 0.15, 0 ≤ d ≤ 0.20, 0 ≤ e ≤ 0.05, b + c + d + e = 1, and -0.2 < α < 0.2]. A residual lithium hydroxide quantity (L1) in the positive electrode active material calculated by neutralization titration is 0.8 mass% or less, and a ratio of a residual lithium hydroxide quantity (L2) calculated by the neutralization titration after the positive electrode active material is compressed with a pressure of 160 MPa to L1, that is, L2/L1 is 1.10 or less.

## Description

### TECHNICAL FIELD

The present invention relates to a positive electrode active material for a lithium-ion secondary battery, a manufacturing method for the same, and a lithium-ion secondary battery including the positive electrode active material.

### BACKGROUND ART

As lightweight secondary batteries with high energy density, lithium-ion secondary batteries have been widely used. Regarding a positive electrode active material that has a large influence on battery characteristics, examinations have been conducted on reduction of the resistance of lithium ions and stabilization of a crystal structure, for example, in addition to achievement of high capacity and mass-productivity. As the positive electrode active material for a lithium-ion secondary battery, lithium transition metal composite oxide with an α-NaFeO₂ type crystal structure (hereinafter also referred to as layered structure) has been widely known. Among the lithium transition metal composite oxide with the layered structure, nickel-rich composite oxide is formed of basically nickel, which is less expensive than cobalt and the like, and exhibits relatively high capacity; therefore, the lithium transition metal composite oxide with the nickel-rich layered structure is expected to be usable in various applications. In particular, a positive electrode active material for a lithium-ion secondary battery in which the nickel ratio per metal excluding lithium (such as Ni, Co, or Mn) is high has been expected more.

Using the lithium transition metal composite oxide with a high nickel ratio, however, causes gelation easily of a slurry applied for a positive electrode. Gelation leads to a problem that the viscosity of a positive electrode mixture slurry becomes higher so that it becomes difficult to form the electrode by application. The lithium transition metal composite oxide with a high nickel content usually has a large quantity of residual alkali component including lithium such as lithium hydroxide and lithium carbonate remaining on a surface of an oxide particle compared to the lithium transition metal composite oxide with a low nickel content. In a step of applying a mixture for manufacturing a positive electrode, by mixing this with a binder or the like, a positive electrode mixture slurry is manufactured. Here, the residual alkali component alters the binder easily and results in the positive electrode mixture slurry gelation.

Patent Literature 1 discloses a method for reducing the residual lithium quantity in a positive electrode active material particle as one way to reduce the residual alkali component. This method includes at least the following step. In this step, the calcinating temperature for the positive electrode active material particle formed of lithium composite oxide is set to be 850°C or more and the set calcinating temperature is kept in the air atmosphere for a predetermined time. After that, the atmosphere while the set calcinating temperature is decreased is changed from the air atmosphere to a low carbon dioxide gas atmosphere in which the carbon dioxide concentration is 1/60 or less of the carbon dioxide concentration of the air atmosphere, and a mixture of a lithium compound and a precursor compound containing Ni, Co, and Mn is calcinated; thus, lithium composite oxide is prepared.

Patent Literature 2 describes a manufacturing method for a positive electrode active material for a nonaqueous electrolyte secondary battery including the following step. In this step, water is added to powder including lithium nickel composite oxide expressed by General Formula (A): Li_{z}Ni_{1-x-y}CoₓM_{y}O₂ (in which 0.10 ≤ x ≤ 0.20, 0 ≤ y ≤ 0.10, and 0.97 ≤ z ≤ 1.20 are satisfied, and M represents at least one kind of element selected from Mn, V, Mg, Mo, Nb, Ti, and Al), so that 500-g/L to 2000-g/L slurry is formed. This slurry is washed with water by stirring, filtered, and then heated at a temperature of 120°C or more and 550°C or less in an oxygen atmosphere with an oxygen concentration of 80 vol% or more.

### CITATION LIST

### PATENT LITERATURES

PATENT LITERATURE 1: JP-A-2018-067524
PATENT LITERATURE 2: WO2014/189108

### SUMMARY OF INVENTION

### PROBLEMS TO BE SOLVED BY INVENTION

In Patent Literature 1, after the predetermined calcinating temperature is kept for a predetermined time in the air atmosphere, the atmosphere is changed from the air atmosphere to the low carbon dioxide gas atmosphere and the temperature is decreased, so that the quantity of residual lithium carbonate generated in a temperature-decreasing process is reduced. However, in the case of the high nickel content with a nickel content ratio of 80% or more, the carbon dioxide gas contained even in the air atmosphere advances the reaction of generating lithium carbonate from the lithium transition metal composite oxide while the calcinating temperature is kept for a predetermined time (about 3 to 10 hours). Accordingly, it has been difficult to sufficiently reduce the residual alkali component.

In Patent Literature 2, the residual alkali component is reduced by washing the lithium nickel composite oxide with water. Here, by defining the quantity of lithium nickel composite oxide, water, and the like, the lithium extraction from inside the particle of the lithium nickel composite oxide is suppressed. However, water-washing substantially results in the lithium extraction near a surface layer of the particle. Therefore, the decrease in capacity and the increase in resistance of the positive electrode due to lithium deficiency easily occur. Furthermore, water-washing itself is the addition of steps; thus, this has not been preferable in point of production efficiency.

In view of the above, it is an object of the present invention to provide a positive electrode active material for a lithium-ion secondary battery as described below and a manufacturing method with excellent productivity, and provide a lithium-ion secondary battery including this positive electrode active material. Although this positive electrode active material for a lithium-ion secondary battery has a high Ni ratio, in which the nickel content ratio is 80% or more, this material can provide an excellent positive electrode mixture slurry that does not gelate easily at the application of the mixture. Thus, the positive electrode active material for a lithium-ion secondary battery shows high discharge capacity and an excellent charge and discharge cycle characteristic.

### SOLUTION TO PROBLEMS

A positive electrode active material for a lithium-ion secondary battery according to the present invention, including lithium transition metal composite oxide expressed by Composition Formula (1):

Li₁₊ₐNi_{b}Co_{c}M_{d}XₑO_{2+α} (1)

[in which M represents at least one kind selected from Al and Mn, X represents one or more kinds of metal elements other than Li, Ni, Co, Al, and Mn, and a, b, c, d, e, and α are numerals satisfying -0.04 ≤ a ≤ 0.04, 0.80 ≤ b ≤ 1.0, 0 ≤ c ≤ 0.15, 0 ≤ d ≤ 0.20, 0 ≤ e ≤ 0.05, b + c + d + e = 1, and -0.2 < α < 0.2], in which a residual lithium hydroxide quantity (L1) in the positive electrode active material calculated by neutralization titration is 0.8 mass% or less, and a ratio of a residual lithium hydroxide quantity (L2) calculated by the neutralization titration after the positive electrode active material is compressed with a pressure of 160 MPa to L1, that is, L2/L1 is 1.10 or less.

A manufacturing method for a positive electrode active material for a lithium-ion secondary battery according to the present invention is a manufacturing method for a positive electrode active material for a lithium-ion secondary battery including lithium transition metal composite oxide expressed by Composition Formula (1):

Li₁₊ₐNi_{b}Co_{c}M_{d}XₑO_{2+α} (1)

[in which M represents at least one kind selected from Al and Mn, X represents one or more kinds of metal elements other than Li, Ni, Co, Al, and Mn, and a, b, c, d, e, and α are numerals satisfying -0.04 ≤ a ≤ 0.04, 0.80 ≤ b ≤ 1.0, 0 ≤ c ≤ 0.15, 0 ≤ d ≤ 0.20, 0 ≤ e ≤ 0.05, b + c + d + e = 1, and -0.2 < α < 0.2], and
the manufacturing method includes: a mixing step of mixing a compound containing the metal elements of Li, Ni, Co, M, and X in Composition Formula (1); a granulating step of obtaining a granular body from a raw material slurry obtained through the mixing step; and a calcinating step of calcinating the granular body to obtain lithium transition metal composite oxide expressed by Composition Formula (1), in which the calcinating step is a multi-stage heat treatment step including at least a first heat treatment step of keeping the heat treatment temperature at 600°C or more and less than 750°C and a second heat treatment step of keeping the heat treatment temperature at 750°C or more and 900°C or less, and the calcinating step includes an annealing treatment step of subsequently decreasing the temperature from a maximum temperature and keeping a temperature band of 700°C or more and 800°C or less for 1.5 hours or more.

Moreover, the present invention provides a lithium-ion secondary battery including a positive electrode containing the aforementioned positive electrode active material for a lithium-ion secondary battery.

In the positive electrode active material for a lithium-ion secondary battery with a high Ni ratio, in which the nickel content ratio is 80% or more (hereinafter also referred to as "positive electrode active material" simply), as described in the present invention, Ni mostly changes from stable +2 valence to unstable +3 valence in the calcinating step. Therefore, the crystal structure becomes unstable and a part of Li is not taken in the positive electrode active material or Li near the surface of the positive electrode active material is extracted after the calcination; as a result, the residual alkali component remains on the surface of the positive electrode active material. In the present invention, it has been found that the residual alkali component derived from the high Ni ratio also remains in the secondary particle, and the present invention is characterized in that not just the residual alkali component on the surface of the positive electrode active material is reduced but also the residual alkali component inside the secondary particle is reduced. Specifically, in the calcinating step, the annealing treatment of decreasing the temperature in a predetermined time in the temperature band of 700°C or more and 800°C or less is added after the regular calcination. By performing the annealing treatment, the residual alkali component on the surface of the primary particle is subjected to the reaction and taken into the primary particle; thus, the residual alkali component inside the secondary particle can be reduced. Therefore, even when the positive electrode active material is compressed and the secondary particle is broken in the application of the mixture to expose the inside of the secondary particle, the residual alkali component does not increase. Thus, the positive electrode active material in which the gelation of the positive electrode mixture slurry is suppressed and the capacity and the cycle characteristic are high can be provided.

### EFFECTS OF INVENTION

According to the present invention, in a positive electrode active material with a high Ni ratio, in which the nickel content ratio is 80% or more, an excellent positive electrode mixture slurry in which gelation at the application of a mixture is suppressed can be obtained. Moreover, a positive electrode active material for a lithium-ion secondary battery with the high discharge capacity and the excellent charge and discharge cycle characteristic can be provided by a manufacturing method with excellent productivity. Moreover, a lithium-ion secondary battery including this positive electrode active material can be provided.

### BRIEF DESCRIPTION OF DRAWINGS

Fig. 1A is a flowchart illustrating one example of a manufacturing method for a positive electrode active material according to the present invention.
Fig. 1B is a flowchart illustrating another example of the manufacturing method for a positive electrode active material according to the present invention.
Fig. 2 is a partial cross-sectional view schematically illustrating one example of a lithium-ion secondary battery.
Figs. 3(a) to 3(c) are diagrams each illustrating an example of an annealing treatment step in the manufacturing method for a positive electrode active material according to the present invention.
Fig. 4 is a diagram illustrating the particle size distribution before and after compression in Example 1 of the present invention.
Fig. 5 is a diagram expressing the relation between the residual lithium hydroxide quantity and the number of days for gelation.
Fig. 6 is a diagram expressing the relation between the residual lithium hydroxide quantity and the capacity retention.
Fig. 7 is a diagram expressing the relation between L2/L1 and the number of days for gelation.
Fig. 8 is a diagram expressing the relation between L2/L1 and the capacity retention.

### DESCRIPTION OF EMBODIMENTS

A positive electrode active material for a lithium-ion secondary battery according to one embodiment of the present invention, a manufacturing method for the same, a positive electrode mixture slurry, and a lithium-ion secondary battery including the same are hereinafter described in detail.

### <Positive electrode active material>

A positive electrode active material according to the present embodiment has an α-NaFeO₂ type crystal structure with a layered structure, and includes lithium transition metal composite oxide formed of lithium and transition metal. This positive electrode active material mainly contains primary particles of lithium transition metal composite oxide and secondary particles of lithium transition metal composite oxide each formed by the aggregation of a plurality of primary particles. The lithium transition metal composite oxide includes, as a main phase, the layered structure capable of intercalation and deintercalation of lithium ions.

The positive electrode active material according to the present embodiment may include, in addition to the lithium transition metal composite oxide corresponding to the main component, inevitable impurities derived from raw materials and a manufacturing process, other components covering the particles of the lithium transition metal composite oxide, such as a boron component, a phosphorus component, a sulfur component, a fluorine component, and organic matters, and other components to be mixed with the particles of the lithium transition metal composite oxide.

The lithium transition metal composite oxide according to the present embodiment is expressed by the following Composition Formula (1):

Li₁₊ₐNi_{b}Co_{c}M_{d}XₑO_{2+α} (1)

[in which M represents at least one kind selected from Al and Mn, X represents one or more kinds of metal elements other than Li, Ni, Co, Al, and Mn, and each of a, b, c, d, e, and α is a numeral satisfying -0.04 ≤ a ≤ 0.04, 0.80 ≤ b ≤ 1.0, 0 ≤ c ≤ 0.15, 0 ≤ d ≤ 0.20, 0 ≤ e ≤ 0.05, b + c + d + e = 1, and -0.2 < α < 0.2].

In the lithium transition metal composite oxide expressed by Composition Formula (1), the nickel ratio per metal excluding lithium is 80% or more. That is to say, in terms of the atomic number fraction to the total of Ni, Co, M, and X, Ni is contained by 80% or more. This is nickel oxide that can achieve the high discharge capacity because of the high nickel content. Moreover, the high nickel content is advantageous in the lower material cost than LiCoO₂ or the like and the productivity including the material cost.

### (Chemical composition)

Here, the definition of the chemical composition expressed by Composition Formula (1) is described.

In Composition Formula (1), a is -0.04 or more and 0.04 or less, and represents whether lithium is excessive or deficient for Li(Ni, Co, M, X)O₂ in the stoichiometric ratio. Moreover, a is not a preparation value at the synthesis of raw materials but a value in the lithium transition metal composite oxide obtained by calcination. In a case where lithium is too excessive or deficient in Composition Formula (1), that is, the quantity of lithium is excessively small with respect to the total of Ni, Co, M, and X or the quantity of lithium is excessively large, the synthesis reaction does not advance properly in the calcination. Therefore, the residual alkali component remains on the surface of the positive electrode active material or cation mixing, that is, mixing of nickel in a lithium site, easily occurs and accordingly, the crystallinity deteriorates easily. In particular, in the case where the nickel ratio is as high as 80% or more, the occurrence of such residual alkali components and cation mixing and the decrease in crystallinity tend to be remarkable, and the positive electrode mixture slurry easily gelates and the discharge capacity and the charge and discharge cycle characteristic easily deteriorate. In this regard, when a is in the aforementioned numerical range, the residual alkali component and cation mixing can be suppressed and various kinds of battery performance can be improved. Thus, even in the composition with the high nickel content, the gelation of the positive electrode mixture slurry can be suppressed and the high discharge capacity and the excellent charge and discharge cycle characteristic can be obtained.

It is preferable that a is 0.00 or more and 0.04 or less. When a is 0.00 or more, lithium is not insufficient with respect to the stoichiometric ratio. Therefore, at the calcination, the synthesis reaction advances as appropriate and cation mixing occurs less easily. Thus, a layered structure with fewer defects is formed and the high discharge capacity and the excellent charge and discharge cycle characteristic can be obtained. When a is 0.04 or less, excess of lithium with respect to the stoichiometric ratio is small and the residual alkali component on the surface of the positive electrode active material is small; thus, the positive electrode mixture slurry becomes difficult to gelate. Note that regarding the positive electrode active material mainly containing the lithium transition metal composite oxide expressed by Composition Formula (1), the ratio between the atom concentration (number of moles) of lithium in the positive electrode active material and the total atom concentration (number of moles) of metal elements other than lithium is preferably 0.96 or more and 1.04 or less and more preferably 1.00 or more and 1.04 or less. In the calcinating precursor that is calcinated by heat treatment, other components may be mixed, and the reaction ratio at the calcination may deviate from the stoichiometric ratio. However, by such an atomic concentration ratio, it is likely that the gelation of the positive electrode mixture slurry, cation mixing, and the decrease in crystallinity are suppressed on the basis of the chemical composition expressed by Composition Formula (1) at the calcination. Thus, the positive electrode active material of which various kinds of battery performance are improved can be obtained.

The preferred range of a in the state of powder manufactured as the positive electrode active material is described above. In the case where the positive electrode active material expressed by Composition Formula (1) is incorporated in the positive electrode of the lithium-ion secondary battery, charging and discharging with the intercalation and deintercalation of lithium are performed; thus, a is preferably in the range of -0.9 to 0.04.

A coefficient b of nickel in Composition Formula (1) is 0.80 or more and 1.00 or less. When b is 0.80 or more, high discharge capacity can be obtained compared to other nickel-enriched oxide and tertiary oxide expressed by Li(Ni, Co, M)O₂ with a low nickel content. Since the quantity of transition metal, which is rarer than nickel, can be reduced, the material cost can be reduced.

The coefficient b of nickel may be 0.85 or more, 0.90 or more, or 0.92 or more. As b is larger, the high discharge capacity tends to be obtained. The coefficient b of nickel may be 0.95 or less, 0.90 or less, or 0.85 or less. As b is smaller, the lattice strain or crystal structure change due to the intercalation and deintercalation of lithium ions is smaller, and at the calcination, the cation mixing, that is, mixing of nickel in a lithium site, and the decrease in crystallinity are suppressed. Accordingly, the excellent charge and discharge cycle characteristic tends to be obtained.

A coefficient c of cobalt in Composition Formula (1) is 0 or more and 0.15 or less. Cobalt may be added on purpose or may be contained at the composition ratio corresponding to inevitable impurities. When cobalt is in the above range, the effects of making the crystal structure more stable and suppressing the cation mixing, that is, mixing of nickel in a lithium site, and so on can be obtained. Thus, the high discharge capacity and the excellent charge and discharge cycle characteristic can be obtained. On the other hand, when cobalt is excessive, the material cost for the positive electrode active material increases. In addition, the ratio of other transition metal such as nickel may decrease, the discharge capacity may decrease, and the effect from the metal element expressed by M may decrease. In this regard, when c is in the aforementioned numeral range, the material cost for the lithium transition metal composite oxide exhibiting the high discharge capacity and the excellent rate characteristic and charge and discharge cycle characteristic can be reduced.

From the viewpoints of reducing the material cost and saving the resources, the coefficient c of cobalt is preferably 0.01 or more and 0.10 or less. The coefficient c is more preferably 0.02 or more and 0.07 or less. As c is smaller, the material cost can be reduced.

M in Composition Formula (1) represents at least one or more kinds of metal elements selected from Al and Mn. These elements can be substituted with a Ni site. Since Al is a typical element, Al exists stably without a change in valence during charging and discharging. Although Mn is transition metal, it is considered that Mn exists stably while remaining with a valence of +4 during charging and discharging. Therefore, using these metal elements can obtain the effect that the crystal structure in the charging and discharging is stabilized.

A coefficient d of M in Composition Formula (1) is 0 or more and 0.20 or less. When the metal element expressed by M is excessive, the ratio of other transition metal such as nickel decreases and the discharge capacity of the positive electrode active material may decrease. In this regard, when d is in the aforementioned numeral range, the high discharge capacity and the excellent rate characteristic and charge and discharge cycle characteristic tend to be obtained.

X in Composition Formula (1) is one or more kinds of metal elements other than Li, Ni, Co, Al, and Mn (hereinafter also referred to as X element or element X). X is an element that can form a α-NaFeO₂ type crystal structure with a layered structure and can be selected in accordance with the required characteristic. For example, in a case of the metal element that, after the α-NaFeO₂ type crystal structure with a layered structure is formed by reaction between Li and Ni, forms a highly concentrated layer by reaction with Li, the X element exists on a surface of the primary particle of the positive electrode active material in the calcinating step with relatively low temperature in which the reaction between Li and Ni is started. In the subsequent high-temperature calcinating step, the X element easily forms the highly concentrated layer on the surface of the primary particle. In particular, by performing microscopic crushing after mixing all the elements including the X element in advance in accordance with a solid phase method, the X element can be distributed on the surface of the primary particle inside the secondary particle. It is preferable that the X element that can form the highly concentrated layer is at least one or more kinds of elements selected from the group consisting of Ti, Ga, Mg, Zr, and Zn. Among these elements, at least Ti is preferably contained. Since Ti may be tetravalent, Ti is firmly bonded with O. Thus, the effect of stabilizing the crystal structure is large. In addition, Ti has relatively small atomic weight and the decrease in theoretical capacity of the positive electrode active material when Ti is added is small. Using these metal elements X can obtain the effect of suppressing the deterioration in crystal structure from the vicinity of the surface of the positive electrode active material during the charging and discharging.

A coefficient e of X in Composition Formula (1) is 0 or more and 0.05 or less. By the addition of X, the crystal structure near the surface of the positive electrode active material becomes more stable and the excellent charge and discharge cycle characteristic can be obtained as described above. On the other hand, when X is excessive, the ratio of other transition metals including nickel decreases, and accordingly the discharge capacity may decrease and the effect by the metal element expressed by M may decrease. In this regard, when e is in the aforementioned numerical range, lithium transition metal composite oxide with the high discharge capacity and the excellent charge and discharge cycle characteristic can be obtained.

The coefficient e of X is preferably 0.01 or more and 0.03 or less. When e is 0.01 or more and 0.03 or less, the ratio of Ni on the surface of the primary particle decreases and the change of the crystal structure near the surface of the primary particle decreases. Accordingly, the layered structure with fewer defects is formed and the high discharge capacity and the excellent charge and discharge cycle characteristic can be obtained.

In Composition Formula (1), α is more than -0.2 and less than 0.2, and expresses whether oxygen is excessive or deficient for Li(Ni, Co, M, X)O₂ in the stoichiometric ratio. When α is in the aforementioned numerical range, the state where the crystal structure has fewer defects is obtained and by the suitable crystal structure, the high discharge capacity and the excellent rate characteristic and charge and discharge cycle characteristic can be obtained. Note that the value of α can be measured by an inert gas fusion-infrared absorption method.

### (Secondary particle)

The average particle diameter of the primary particles of the positive electrode active material is preferably 0.05 µm or more and 2 µm or less. When the average particle diameter of the primary particles of the positive electrode active material is 2 µm or less, the reaction field where lithium ions of the positive electrode active material are intercalated and deintercalated can be secured and the high discharge capacity and the excellent charge and discharge cycle characteristic can be obtained. The average particle diameter is more preferably 1.5 µm or less, and much more preferably 1.0 µm or less. In addition, the average particle diameter of the secondary particles of the positive electrode active material is more preferably 3 µm or more and 50 µm or less.

The secondary particle of the positive electrode active material (granular body) can be obtained by granulating the primary particles manufactured by a manufacturing method for the positive electrode active material to be described below, in accordance with dry granulation or wet granulation. The granulation can be performed by using, for example, a granulator such as a spray drier or a rotating fluid-bed equipment.

In the lithium transition metal composite oxide expressed by Composition Formula (1), the BET specific surface area is preferably 0.2 m²/g or more, more preferably 0.4 m²/g or more, and much more preferably 0.6 m²/g or more. In addition, the BET specific surface area is preferably 1.5 m²/g or less and more preferably 1.2 m²/g or less. When the BET specific surface area is 0.2 m²/g or more, the positive electrode with sufficiently high molding density and filling rate with the positive electrode active material can be obtained. When the BET specific surface area is 1.5 m²/g or less, the breakdown, deformation, and fall of particles occur less easily at the pressure molding of the lithium transition metal composite oxide and the volume change due to the charging and discharging. And absorption of the binder into the pores can be suppressed. Accordingly, the applicability and adhesion of the positive electrode active material are improved and the high discharge capacity and the excellent charge and discharge cycle characteristic can be obtained.

### (Quantity of positive electrode mixture slurry and residual lithium hydroxide)

The positive electrode active material according to the embodiment of the present invention includes the residual alkali component. The residual alkali component includes lithium, is not a compound that can intercalate and deintercalate lithium reversibly, and includes at least lithium hydroxide and lithium carbonate. The residual lithium hydroxide quantity (L1) in the residual alkali component is 0.8 mass% or less of the positive electrode active material, and the ratio of the residual lithium hydroxide quantity (L2) after the positive electrode active material is compressed with a pressure of 160 MPa (≅ 16,327 N/cm²) to L1 (L2/L1) is 1.10 or less. Here, the residual alkali component can be confirmed by neutralization titration.

In the neutralization titration, the following reaction advances by the use of chloric acid (HCl):

LiOH+HCl → LiCl+H₂O

L₁₂CO₃+HCl → LiHCO₃+LiCl

LiHCO₃+HCl → LiCl+H₂O+CO₂

Thus, the residual lithium hydroxide quantity and the residual lithium carbonate quantity can be calculated from the quantity of dropping chloric acid. The residual lithium hydroxide quantity is 0.8 mass% or less, preferably 0.77 mass% or less, and more preferably 0.6 mass% or less of the positive electrode active material. When the residual lithium hydroxide quantity is 0.8 mass% or less, even if polyvinylidene fluoride (PVDF) with high versatility is used as the binder, the gelation of the positive electrode mixture slurry can be suppressed without the progress of the unstable defluorination reaction of PVDF in the basic compound.

The residual lithium hydroxide quantity measured by neutralization titration is limited to the quantity on the surface of the secondary particle of the positive electrode active material in contact with water and the surface of the gap in the secondary particle the water can enter. When the positive electrode mixture slurry is manufactured, however, it is necessary to homogeneously mix the positive electrode active material, the conductive material, the binder, and the like. For this purpose, kneading is performed with a high shear and as a result, a part of the secondary particles collapses. Therefore, the decrease in residual lithium hydroxide quantity inside the secondary particle is also effective in suppressing the gelation of the positive electrode mixture slurry. The ratio of L2 after the compression to the residual lithium hydroxide quantity L1, that is, L2/L1 is preferably 1.10 or less. When L2/L1 is 1.10 or less, the state in which the residual lithium hydroxide quantity is sufficiently small can be kept even if a part of the secondary particles has collapsed, and thus, the gelation of the positive electrode mixture slurry can be suppressed. Here, the pressure at the compression may be as follows.

### (Viscosity of positive electrode mixture slurry)

In order to form the positive electrode mixture slurry containing the conductive material, the binder, the solvent, and the positive electrode active material suitably on the surface of the positive electrode current collector (for example, Al foil) by application, it is necessary that the gelation of the positive electrode mixture slurry is suppressed, and more specifically, the viscosity of the positive electrode mixture slurry is stable. That is to say, it is preferable that the viscosity η0 of the slurry immediately after the positive electrode mixture slurry is manufactured and the viscosity η5 of the slurry measured after the positive electrode mixture slurry is left at rest and kept for five days after the date of manufacture are equal. When the ratio of the viscosity of the slurry (η5/η0) is 0.80 or more and 1.2 or less, the suitable application can be performed.

### (Compression of positive electrode active material)

In the positive electrode active material in the positive electrode mixture slurry, a part of the secondary particles is destroyed due to the shear applied in the process of adjustment in the step of applying the mixture. In view of this, in order to simulate the state of the positive electrode active material in the positive electrode mixture slurry, a part of the secondary particles was destroyed by compressing the positive electrode active material.

Specifically, 1 g of the positive electrode powder was put into a dice with an area of 0.49 cm². After that, compression was performed with a load of 8 kN, that is, a pressure of 16,327 N/cm² per unit area (160 MPa in SI unit) using an autograph device "AGS-1kNX" (manufactured by Shimadzu Corporation), and thus, the positive electrode active material was collected. Note that the compression force is 16,327 N/cm² in calculation; however, for the convenience, the compression force was regarded as 16.0 kN/cm² and converted into a pressure of 160 MPa.

### (Crystallinity)

On the surface of the positive electrode active material, the residual alkali component exists and lithium near the surface is deficient in the manufacturing process; therefore, compared to the inside of the positive electrode active material, the crystallinity tends to be lower. The crystallinity near the surface of the positive electrode active material can be analyzed by Raman spectrometry. In the positive electrode active material according to the embodiment of the present invention, the half width of E_{g} vibration is preferably 68 cm⁻¹ or less and the half width of A_{1g} vibration is preferably 50 cm⁻¹ or less in the Raman spectrometry of the positive electrode active material. E_{g} vibration is based on the deformation vibration of Ni-O, and has a peak in wavenumbers of 472 to 482 cm⁻¹. A_{1g} vibration is based on the stretching vibration of Ni-O, and has a peak in wavenumbers of about 545 to 555 cm⁻¹. When the half width of the E_{g} vibration is 68 cm⁻¹ or less, the crystallinity near the surface of the positive electrode active material is sufficiently high and the high discharge capacity and the excellent charge and discharge cycle characteristic can be obtained. When the half width of the A_{1g} vibration is 50 cm⁻¹ or less, the crystallinity is sufficiently high and the high discharge capacity and the excellent charge and discharge cycle characteristic can be obtained.

### <Measuring means for positive electrode active material>

The average composition of the particles of the positive electrode active material can be confirmed by inductively coupled plasma (ICP), atomic absorption spectrometry (AAS), or the like. Regarding the average particle diameter of the primary particles of the positive electrode active material, the particle diameter of the primary particle was calculated by dividing the traversing line length when a straight line was drawn in a predetermined direction of a cross-sectional observation image of the secondary particle using a scanning electron microscope (SEM), by the number of primary particles included in the traversing straight line. The average value of the ten secondary particles was used as the average particle diameter of the primary particles. The straight line in the predetermined direction is the straight line until the primary particles are disconnected in consideration of the case in which the cross section of the secondary particle has a gap or the like, and is referred to as the traversing line. The average particle diameter of the particles in the raw material slurry and the secondary particles of the positive electrode active material can be measured by a laser diffraction grain size distribution measurement device or the like. The BET specific surface area can be calculated by a gas adsorption method using an automatic specific surface area measurement device. The residual alkali component in the positive electrode active material can be calculated by neutralization titration. The positive electrode active material can be compressed by a pressing machine, an autograph, or the like as described above.

### <Manufacturing method for positive electrode active material>

The positive electrode active material according to the present embodiment can be manufactured by surely advancing the synthesis reaction between lithium and nickel and cobalt and the like in accordance with the proper calcinating condition while the raw material ratio is set so that the lithium transition metal composite oxide has the chemical composition expressed by Composition Formula (1). In a manufacturing method for the positive electrode active material according to the embodiment of the present invention, a solid phase method to be described below is used.

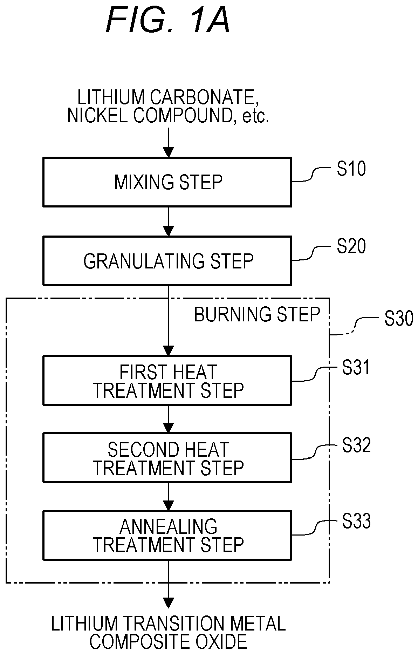

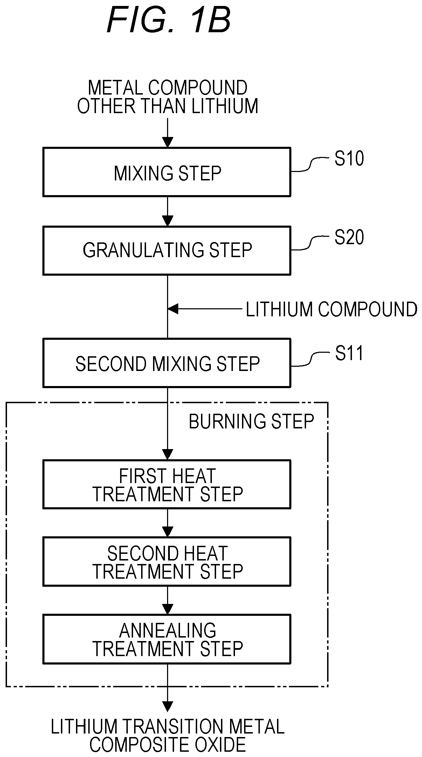

Figs. 1A and 1B are flowcharts of a manufacturing method for a positive electrode active material for a lithium-ion secondary battery according to one embodiment of the present invention.

As illustrated in Fig. 1A, the manufacturing method for a positive electrode active material for a lithium-ion secondary battery according to the present embodiment includes a mixing step S10, a granulating step S20, and a calcinating step S30 in this order. Here, the granulating step includes granulating and drying by a spray drier and chemical synthesis by a coprecipitation method. Other steps than those above may be added. For example, in a case where much moisture remains in the granular powder obtained in the granulating step S20, steam is generated in large quantity in the calcinating step S30. In this case, by adding a dehydrating step by heating after the granulating step S20, the moisture quantity in the granular powder can be reduced. Moreover, as illustrated in Fig. 1B, after the compound containing metal other than lithium is processed in the mixing step S10 and the granulating step S20, a lithium compound may be added and mixing may be performed in a second mixing step S11 and then, calcination may be performed in the calcinating step S30.

In the mixing step S10 illustrated in Fig. 1A, the compound containing metal elements of Li, Ni, Co, M, and X in Composition Formula (1) is mixed. For example, by weighing, crushing, and mixing these raw materials, the mixture in the powder form in which the raw materials were uniformly mixed was obtained. Examples of the crusher that crushes the raw materials include general precise crushers including a ball mill, a jet mill, a rod mill, and a sand mill. The raw materials may be crushed in either a dry procedure or a wet procedure. After the dry crushing, a solvent such as water may be added to form a slurry including the raw materials and the solvent. Alternatively, after a slurry is obtained by adding a solvent such as water to the raw materials, the wet crushing may be performed. From the viewpoint of obtaining the uniform and microscopic powder with an average particle diameter of 0.3 µm or less, the wet crushing with the use of the solvent such as water is preferable.

In the present embodiment, in order to increase the concentration of the X element near the surface of the primary particle inside the secondary particle, it is important to perform the mixing so that the uniform and microscopic powder with an average particle diameter of 0.3 µm or less is formed by crushing the other raw materials at the same time in the step of mixing the raw materials with the solid phase.

Examples of the compound containing lithium include lithium carbonate, lithium acetate, lithium nitrate, lithium hydroxide, lithium chloride, and lithium sulfate. Lithium carbonate can be obtained more easily than other compounds containing lithium because lithium carbonate is excellent in supply stability and inexpensive. Moreover, since lithium carbonate is weak alkaline, lithium carbonate damages a manufacturing apparatus less and therefore, is excellent in industrial applicability and practicability.

Regarding the compound containing metal elements other than lithium, a compound containing nickel, a compound containing cobalt, a compound containing a metal element expressed by M, and a compound containing a metal element expressed by X are mixed in accordance with the composition of lithium transition metal composite oxide. As the compound containing the metal element other than lithium, compounds formed of C, H, O, and N, such as carbonate, hydroxide, oxyhydroxide, sulfate, acetate, citrate, and oxide, are preferably used. From the viewpoint of how easily the crushing can be performed and how much gas is released by thermal decomposition, carbonate, hydroxide, or oxide is particularly preferable.

In the mixing step S10, it is preferable to mix the raw materials so that the calcinating precursor subjected to the calcinating step S30 has the chemical composition expressed by Composition Formula (1). Specifically, it is preferable that the atomic concentration ratio (molar ratio) of the atomic concentration (number of moles) of lithium in the calcinating precursor and the atomic concentration (number of moles) of the total of the metal elements other than lithium in the calcinating precursor is adjusted to be 0.96 or more and 1.04 or less. However, as illustrated in Fig. 1B, in the case where the compound containing the metal element other than lithium is mixed in the mixing step S10, the atomic concentration ratio (molar ratio) of the total of lithium and the metal element other than lithium is adjusted in the second mixing step S11. If the atomic concentration ratio (number of moles) is less than 0.96, lithium is deficient; thus, in this case, the calcinating of the suitable main phase with the less heterogenous phase tends to fail. On the other hand, if the atomic concentration ratio is more than 1.04, the synthesis reaction does not advance suitably and the crystallization degree of the layered structure may become low. Thus, the mixing step of mixing the compound including the metal elements of Li, Ni, Co, M, and X in Composition Formula (1) includes the mixing step S10 in Fig. 1A and the second mixing step S11 in Fig. 1B.

In order to obtain the lithium transition metal composite oxide of which the lattice strain or crystal structure change due to the intercalation and deintercalation of lithium ions is suppressed, cation mixing in which divalent nickel is likely to generate needs to be suppressed sufficiently. From the viewpoint of suppressing cation mixing sufficiently at the calcination, the synthesis reaction between lithium and nickel and the like needs to advance for sure. Thus, it is more desirable that lithium and nickel and the like are subjected to reaction at a ratio of about 1:1 in accordance with the stoichiometric ratio.

Accordingly, in the stage of the mixing step S10 where the precise crushing mixing is performed, the atomic concentration ratio thereof is preferably adjusted in advance. In the case of adjusting in advance, the atomic concentration ratio (molar ratio) of the atomic concentration (number of moles) of lithium in the calcinating precursor and the atomic concentration ratio (number of moles) of the total of the metal elements other than lithium is more preferably 1.00 or more and 1.04 or less. However, lithium included in the calcinating precursor may react with a calcinating container or evaporate at the calcination. In consideration of the disappearance of a part of lithium due to the reaction between lithium and the container used in the calcination and evaporation of lithium in the calcination, lithium may be added excessively at the time of preparation.

In order to obtain lithium transition metal composite oxide in which the lattice strain or the crystal structure change due to the intercalation and deintercalation of lithium ions is reduced, it is preferable to avoid the mixing of the metal element other than lithium, such as inevitable impurities derived from a manufacturing process, other components covering the particle of lithium transition metal composite oxide, and other components to be mixed with the particle of lithium transition metal composite oxide after the mixing step S10 and before the calcinating step S30.

In the granulating step S20, the secondary particle (granular body) where the particles are aggregated is obtained by granulating the mixture obtained in the mixing step S10. The mixture may be granulated using either dry granulation or wet granulation. The mixture can be granulated by, for example, a suitable granulation method such as a rotary granulation method, a fluidized-bed granulation method, a compression granulation method, or a spray granulation method. Alternatively, chemical particle synthesis such as a coprecipitation method may be performed.

The spray granulation method is particularly preferable as the granulation method for granulating the mixture. As the spray granulation method, various types such as a two-fluid nozzle type, a four-fluid nozzle type, and a disc type may be used. The spray granulation method can granulate, while drying, the mixture (raw material slurry) subjected to the precise mixing crushing by wet pulverization. In addition, by adjusting the concentration of the raw material slurry, the spray pressure, the number of rotations of the disc, and the like, the particle diameter of the secondary particle can be controlled precisely within a predetermined range and the granular body with the uniform chemical composition and the sphere-like shape can be obtained efficiently. In the granulating step S20, the mixture obtained in the mixing step S10 is preferably granulated so that the average particle diameter (D₅₀) becomes 3 µm or more and 50 µm or less.

In the calcinating step S30, the granular body granulated in the granulating step S20 is heated, so that lithium transition metal composite oxide expressed by Composition Formula (1) is calcinated. The calcinating step S30 may be the step of obtaining the positive electrode active material by calcinating lithium transition metal composite oxide simply. However, the calcinating step S30 is preferably performed as a plurality of stages of heat treatment in which heat treatment temperatures are controlled to be in the different ranges. From the viewpoint of obtaining lithium transition metal composite oxide exhibiting the high crystal purity, the high discharge capacity, and the excellent rate characteristic and charge and discharge cycle characteristic, the calcinating step S30 preferably includes a multi-stage heat treatment step including at least a first heat treatment step S31 and a second heat treatment step S32, and an annealing treatment step S33 as illustrated in Figs. 1A and 1B and each preferably satisfies a predetermined condition.

### (First heat treatment step)

In the first heat treatment step S31, the granular body obtained in the granulating step S20 is heated with the heat treatment temperature controlled to be 600°C or more and less than 750°C, so that a first precursor is obtained. A main object of the first heat treatment step S31 is to remove the carbonate component and the hydroxide component by the reaction between the lithium compound, the nickel compound, and the like and to generate crystal of lithium transition metal composite oxide. By sufficiently oxidizing nickel in the calcinating precursor, cation mixing where nickel mixes in the lithium site is suppressed and generation of the cubic crystal domain by the nickel is suppressed. In order to reduce the lattice strain and the crystal structure change due to the intercalation and deintercalation of lithium ions, the metal element expressed by M is oxidized sufficiently, so that the uniformity of the composition of the layer formed of MeO₂ can be increased. For example, the first heat treatment step S31 can be performed for 2 hours or more and 50 hours or less.

In the case where the lithium compound is lithium carbonate, carbon dioxide gas (CO₂ gas) generated as a reaction by-product may interrupt the progress of the calcinating reaction. In order to avoid this interruption, the multi-stage heat treatment by which the CO₂ gas can be discharged gradually is preferable. In the first heat treatment step S31, the quantity of unreacted lithium carbonate that remains in the first precursor is reduced to be preferably 0.3 mass% or more and 3 mass% or less, more preferably 0.5 mass% or more and 2 mass% or less per the total mass of the input granular body. If the retained quantity of lithium carbonate remaining in the first precursor is too large, lithium carbonate may melt to form a liquid phase in the second heat treatment step S32. Calcinating the lithium transition metal composite oxide in the liquid phase, if excessive sintering occurs, causes the primary particle with the layered structure to be excessively oriented or the specific surface area decreases. As a result, the discharge capacity and the charge and discharge cycle characteristic may deteriorate. In addition, if the retained quantity of lithium carbonate remaining in the first precursor is too small, the specific surface area of the lithium transition metal composite oxide to be calcinated becomes excessive and the contact area with the electrolyte solution expands. Thus, the charge and discharge cycle characteristic may deteriorate. On the other hand, when the retained quantity of the unreacted lithium carbonate is in the aforementioned range, the lithium transition metal composite oxide with the high crystal purity can be obtained and the high discharge capacity and the excellent charge and discharge cycle characteristic can be obtained.

If the reaction of lithium carbonate in the first heat treatment step S31 is insufficient and a large quantity of lithium carbonate remains at the end of the first heat treatment step S31, oxygen does not easily spread in the first precursor. If oxygen does not spread in the first precursor in the second heat treatment step S32, nickel is not oxidized sufficiently and cation mixing easily occurs by divalent nickel. On the other hand, if a large part of the lithium carbonate is subjected to the reaction in the first heat treatment step S31, oxygen easily spreads in the first precursor in the powder form. Thus, the excessive remaining of divalent nickel that easily causes cation mixing can be suppressed while manganese or the like is oxidized sufficiently.

When the heat treatment temperature is 600°C or more in the first heat treatment step S31, the crystal generation advances by the reaction between lithium carbonate and the nickel compound and the like; therefore, the remaining of a large quantity of unreacted lithium carbonate can be avoided. Accordingly, it becomes difficult for lithium carbonate to form the liquid phase in the subsequent heat treatment and the crystal grain does not become coarse easily, and as a result, the excellent output characteristic and the like can be obtained. In addition, oxygen easily spreads in the first precursor and cation mixing is suppressed easily. If the heat treatment temperature is less than 750°C, the excessive growth of the crystal grain does not occur in the second heat treatment step S31 and by oxidizing manganese and the like sufficiently, the uniformity of the composition of the layer formed of MeO₂ can be increased.

The heat treatment temperature in the first heat treatment step S31 is preferably 620°C or more, more preferably 650°C or more, and much more preferably 680°C or more. As the heat treatment temperature is higher in this manner, the synthesis reaction is promoted more and the remaining of lithium carbonate is prevented more surely.

The heat treatment temperature in the first heat treatment step S31 is preferably less than 750°C. When the heat treatment temperature is 750°C or more, the unreacted lithium carbonate forms a liquid phase and the crystal grain becomes coarse.

The heat treatment time in the first heat treatment step S31 means to keep the predetermined temperature, and is preferably four hours or more. The heat treatment time is preferably 15 hours or less. When the heat treatment time is in this range, the reaction of lithium carbonate advances sufficiently, so that the carbonate component can be removed for sure. Moreover, since the required time for the heat treatment is shortened, the productivity of lithium transition metal composite oxide is improved.

The first heat treatment step S31 is preferably performed in an oxidative atmosphere. The oxygen concentration of the atmosphere is preferably 50% or more, more preferably 60% or more, and much more preferably 80% or more. The carbon dioxide (CO₂) concentration of the atmosphere is preferably 5% or less and more preferably 2% or less. Moreover, the first heat treatment step S31 is preferably performed in the flow of oxidative gas. Performing the heat treatment in the flow of the oxidative gas can oxidize nickel for sure. Additionally, carbon dioxide released in the atmosphere can be eliminated for sure.

### (Second heat treatment step)

In the second heat treatment step S32, a second precursor is obtained by heating the first precursor obtained in the first heat treatment step S31 by keeping the heat treatment temperature at 750°C or more and 900°C or less. A main object of the second heat treatment step S32 is to make the crystal grain of lithium transition metal composite oxide with the layered structure grow until having the suitable grain diameter and specific surface area. For example, the time of the second heat treatment step S32 means to keep the predetermined temperature in a manner similar to the heat treatment time of the first heat treatment step S31, and can be 0.5 hours or more and 15 hours or less.

In the second heat treatment step S32, if the heat treatment temperature is 750°C or more, nickel is oxidized sufficiently so that cation mixing can be suppressed, and additionally, the crystal grain of lithium transition metal composite oxide can be grown so as to have the suitable grain diameter and specific surface area. In addition, the main phase in which the lattice strain and the crystal structure change caused by the intercalation and deintercalation of lithium ions are reduced is formed; therefore, the high discharge capacity and the excellent charge and discharge cycle characteristic can be obtained. When the heat treatment temperature is 900°C or less, the lithium transition metal composite oxide in which lithium does not evaporate easily, the crystal purity is high, and the discharge capacity and the charge and discharge cycle characteristic and the like are excellent can be obtained.

The heat treatment temperature in the second heat treatment step S32 is preferably 760°C or more, more preferably 780°C or more, and much more preferably 800°C or more. As the heat treatment temperature is higher in this manner, nickel and the metal element expressed by M can be oxidized sufficiently and the grain growth of the lithium transition metal composite oxide can be promoted.

The heat treatment temperature in the second heat treatment step S32 is preferably 880°C or less, and more preferably 860°C or less. As the heat treatment temperature is lower in this manner, lithium evaporates less easily. Therefore, the decomposition of the lithium transition metal composite oxide can be prevented for sure; thus, lithium transition metal composite oxide in which the discharge capacity and the charge and discharge cycle characteristic and the like are excellent can be obtained.

The heat treatment time (keeping time) in the second heat treatment step S32 is preferably 0.5 hours or more. Moreover, the heat treatment time is preferably 15 hours or less. When the heat treatment time is in this range, nickel and the like are sufficiently oxidized and the lithium transition metal composite oxide in which the lattice strain and the crystal structure change caused by the intercalation and deintercalation of lithium ions are reduced can be obtained. Moreover, since the required time for the heat treatment is shortened, the productivity of the lithium transition metal composite oxide can be improved.

The second heat treatment step S32 is preferably performed in the oxidative atmosphere. The oxygen concentration of the atmosphere is preferably 80% or more, more preferably 90% or more, and much more preferably 95% or more. The carbon dioxide concentration of the atmosphere is preferably 2% or less, and more preferably 0.5% or less. Moreover, the second heat treatment step S32 is preferably performed in the flow of oxidative gas. Performing the heat treatment in the flow of the oxidative gas can oxidize nickel and the like for sure. Additionally, carbon dioxide released in the atmosphere can be eliminated for sure.

### (Annealing treatment step)

After at least two or more heat treatment stages including the stage of controlling the heat treatment temperature to be 600°C or more and less than 750°C (first heat treatment step S31) and the stage of controlling the heat treatment temperature to be 750°C or more and 900°C or less (second heat treatment step S32), an annealing treatment step S33 is performed. In this annealing treatment step S33, the temperature band of 700°C or more and 800°C or less is kept for 1.5 hours or more in the cooling process from the maximum temperature (for example, 840°C), so that the lithium transition metal composite oxide is obtained. A main object of the annealing treatment step S33 is to obtain a positive electrode active material with a smaller quantity of residual alkali component and higher crystallinity by taking the residual alkali component remaining inside the secondary particle of the lithium transition metal composite oxide with the layered structure into the lithium transition metal composite oxide as described below.

In the first heat treatment step S31, the formation of the layered compound can be promoted without advancing the grain growth of the primary particle. In the second heat treatment step S32, the crystallinity of the layered compound can be improved sufficiently with the grain growth of the primary particle. On the other hand, at the high temperature over 800°C, the formed layered structure is partially decomposed. Thus, in order to improve the crystallinity further, the annealing treatment step S33 for keeping the temperature band of 700°C or more and 800°C or less, which is near the melting point 723°C of lithium carbonate, for 1.5 hours or more is provided. When the annealing temperature is in this range, the residual lithium that has failed to become crystal in the second heat treatment step becomes the layered compound from the surface of the secondary particle of the positive electrode active material or the surface of the primary particle inside the secondary particle. Therefore, as a result, the lithium transition metal composite oxide with high crystallinity can be obtained.

By the aforementioned annealing treatment, the main phase in which the lattice strain and the crystal structure change caused by the intercalation and deintercalation of lithium ions are reduced is formed while the residual alkali component in the secondary particle of the positive electrode active material is suppressed. Therefore, the gelation resistance of the positive electrode mixture slurry is improved and the high discharge capacity and the excellent charge and discharge cycle characteristic can be obtained. Note that in the case of not performing such an annealing treatment step, the residual alkali component tends to remain in a large quantity inside the secondary particle of the positive electrode active material. When the residual alkali component is calculated by neutralization titration after the positive electrode active material is compressed, the quantity of residual lithium hydroxide is large.

In the annealing treatment step S33, in order to keep the temperature band of 700°C or more and 800°C or less for 1.5 hours or more, it is preferable to cool the temperature band of 700°C or more and 800°C or less in 1.5 hours or more by adjusting the temperature decreasing speed of decreasing the temperature from the maximum temperature. Alternatively, a certain temperature in the range of 700°C or more and 800°C or less may be kept for a predetermined time in the cooling process or after the temperature is decreased once below 700°C, the temperature is increased again to the temperature band of 700°C or more and 800°C or less and the certain temperature may be kept for a predetermined time. The upper limit of the annealing temperature is preferably 790°C or less, and more preferably 780°C or less. The lower limit of the annealing temperature is preferably 720°C or more, and more preferably 740°C or more.

The heat treatment time in the annealing treatment step S33 is preferably 1.5 hours or more. When the heat treatment time is 1.5 hours or more, the lithium transition metal composite oxide with high crystallinity can be obtained by the sufficient reaction between the positive electrode active material and lithium carbonate remaining in the secondary particle of the positive electrode active material. Moreover, the effect remains the same even if the heat treatment time is over 10 hours, and the heat treatment time is preferably 2 hours or more and 8 hours or less, and more preferably 3 hours or more and 6 hours or less. When the heat treatment time is in this range, both the reduction of the residual alkali component and the improvement of the productivity of lithium transition metal composite oxide can be achieved.

The annealing treatment step S33 is preferably performed in the oxidative atmosphere. The oxygen concentration of the atmosphere is preferably 80% or more, more preferably 90% or more, and much more preferably 95% or more. The carbon dioxide concentration of the atmosphere is preferably 0.5% or less, and more preferably 0.1% or less. Moreover, the annealing treatment step S33 is preferably performed in the flow of oxidative gas. Performing the heat treatment in the flow of the oxidative gas causes the reaction of lithium carbonate so that carbon dioxide released in the atmosphere can be eliminated for sure.

### (CO₂ concentration)

In the calcinating step S30, the maximum CO₂ concentration of the atmosphere in the first heat treatment step S31 is higher than the maximum CO₂ concentration in the second heat treatment step S32 and the maximum CO₂ concentration in the second heat treatment step S32 is higher than the maximum CO₂ concentration in the annealing treatment step. In the first heat treatment step S31, elimination of carbonate gas is one of the objects and by the CO₂ generated by the heat treatment, the maximum CO₂ concentration becomes higher than the CO₂ concentration in the second heat treatment step S32 and the annealing treatment step S33. On the other hand, in the second heat treatment step S32 and the annealing treatment step S33, the environment with the low maximum CO₂ concentration is preferable and the maximum CO₂ concentration is preferably lower than that in the first heat treatment step S31 in order to improve the crystallinity of the positive electrode active material. In particular, in the annealing treatment step S33, in order to reduce the residual alkali component in the secondary particle of the positive electrode active material, the environment in which the maximum CO₂ concentration is lower than that in the first heat treatment step S31 and the second heat treatment step S32 is preferable.

### (Calcinating furnace)

In the calcinating step S30, the heat treatment can be performed using a suitable heat treatment device such as a rotary furnace such as a rotary kiln, a roller hearth kiln, a tunnel furnace, a continuous furnace such as a pusher furnace, or a batch furnace. The first heat treatment step S31, the second heat treatment step S32, and the annealing treatment step S33 may be performed using the same heat treatment device or different heat treatment devices. The heat treatment steps may be performed intermittently while changing the atmosphere. Alternatively, in the case of performing the heat treatment while exhausting the gas in the atmosphere, the heat treatment steps may be performed continuously.

Through the aforementioned mixing step S10, granulating step S20, and calcinating step S30, the positive electrode active material formed of the lithium transition metal composite oxide expressed by Composition Formula (1) can be manufactured. In the present invention, the quantity of residual lithium hydroxide and the specific surface area are mainly controlled based on the manufacturing method for the precursor before the heat treatment, the composition ratio of the metal elements including nickel, the retained quantity of unreacted lithium carbonate remaining in the first precursor, the conditions of the temporary calcination, the regular calcination, and the annealing treatment in the calcinating step S30, for example, the adjustment of the heat treatment temperature and the heat treatment time in the first heat treatment step S31, the second heat treatment step S32, and the annealing treatment step S33. When the quantity of residual lithium hydroxide is reduced and the increase in quantity of the residual lithium hydroxide after the positive electrode active material is compressed is sufficiently reduced in the chemical composition expressed by Composition Formula (1), the positive electrode active material in which the gelation of the positive electrode mixture slurry is suppressed and the high discharge capacity and the excellent charge and discharge cycle characteristic are exhibited can be obtained.

In addition, even after the positive electrode active material is incorporated in the battery and the battery is charged and discharged, the characteristics of the present invention are kept. However, regarding the lithium quantity, it is considered that since lithium is extracted, the value of a changes in the range of about -0.9 to 0.

Note that regarding the synthesized lithium transition metal composite oxide, for the purpose of controlling the particle diameter of the secondary particle, for example, a pulverizing step of pulverizing the lithium transition metal composite oxide and a classifying step of classifying the lithium transition metal composite oxide according to a predetermined grain size may be performed.

### <Lithium-ion secondary battery>

Next, a lithium-ion secondary battery including, in a positive electrode, a positive electrode active material (positive electrode active material for lithium-ion secondary battery) including the aforementioned lithium transition metal composite oxide is described.

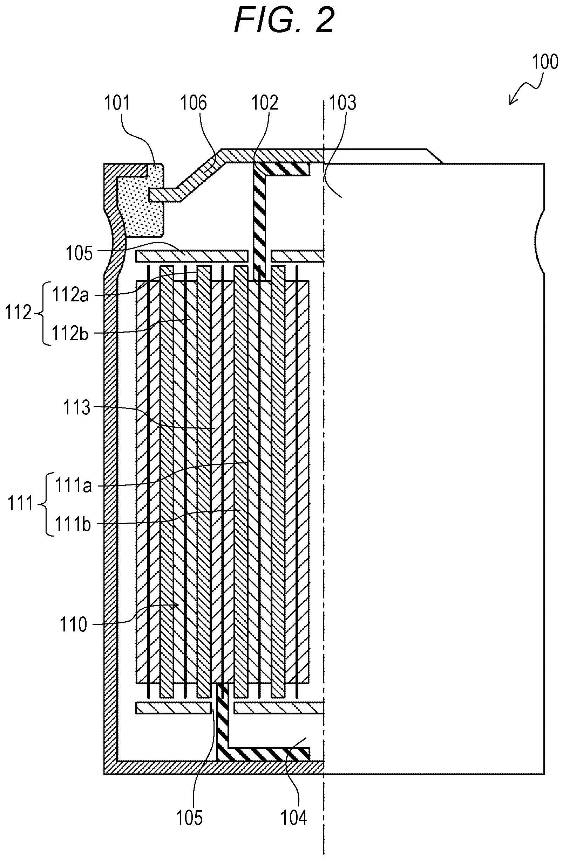

Fig 2 is a partial cross-sectional view schematically illustrating one example of the lithium-ion secondary battery.

As illustrated in Fig. 2, a lithium-ion secondary battery 100 includes a battery can 101 with a bottomed cylindrical shape for housing a nonaqueous electrolyte solution, a wound electrode group 110 housed in the battery can 101, and a battery lid 102 with a circular plate shape for sealing an opening at an upper part of the battery can 101.

The battery can 101 and the battery lid 102 are formed of, for example, a metal material such as stainless steel or aluminum. A positive electrode 111 includes a positive electrode current collector 111a, and a positive electrode mixture layer 111b formed on a surface of the positive electrode current collector 111a. The negative electrode 112 includes a negative electrode current collector 112a, and a negative electrode mixture layer 112b formed on a surface of the negative electrode current collector 112a.

The positive electrode current collector 111a is formed of, for example, a metal foil of aluminum, aluminum alloy, or the like, expandable metal, punched metal, or the like. The metal foil can have, for example, a thickness of about 15 µm or more and 25 µm or less. The positive electrode mixture layer 111b includes a positive electrode active material including the aforementioned lithium transition metal composite oxide. The positive electrode mixture layer 111b is formed of, for example, the positive electrode mixture in which the positive electrode active material, a conductive material, a binder, and the like are mixed.

The negative electrode current collector 112a is formed of, for example, a metal foil of copper, copper alloy, nickel, nickel alloy, or the like, expandable metal, punched metal, or the like. The metal foil can have, for example, a thickness of about 7 µm or more and 10 µm or less. The negative electrode mixture layer 112b includes a negative electrode active material for a lithium-ion secondary battery. The negative electrode mixture layer 112b is formed of, for example, a negative electrode mixture in which the negative electrode active material, a conductive material, a binder, and the like are mixed.

As the negative electrode active material, suitable kinds that can be used for general lithium-ion secondary batteries can be used. Specific examples of the negative electrode active material include a soft carbon material, which is obtained from natural graphite, petroleum coke, pitch coke, or the like, processed at temperature as high as 2500°C or more, mesophase carbon, amorphous carbon, or graphite having a surface covered with amorphous carbon, a carbon material of which the surface crystallinity is decreased by mechanically processing a surface of natural graphite or synthetic graphite, a carbon material having a surface covered with organic matters such as polymers or having the organic matters adsorbed on the surface, carbon fiber, alloy of lithium metal or lithium and aluminum, tin, silicon, indium, gallium, magnesium or the like, a material in which a silicon particle or a carbon particle carries metal on a surface thereof, oxide of tin, silicon, lithium, titanium, or the like, and so on. As the metal to carry, for example, lithium, aluminum tin, indium, gallium, magnesium, alloy thereof, or the like is given.

As the conductive material, suitable kinds that can be used for general lithium-ion secondary batteries can be used. Specific examples of the conductive material include carbon particles of graphite, acetylene black, furnace black, thermal black, channel black, and the like, and pitch based and polyacrylonitrile (PAN) based carbon fiber. Any of these conductive materials may be used alone, or a plurality of kinds may be used in combination. The quantity of the conductive material may be in the range of 3 mass% or more and 10 mass% or less of the entire mixture.

As the binder, suitable kinds that can be used for general lithium-ion secondary batteries can be used. Specific examples of the binder include PVDF, polytetrafluorethylene, polyhexafluoropropylene, styrene-butadiene rubber, polyacrylonitrile, and modified polyacrylonitrile. Any of these binders may be used alone, and a plurality of kinds may be used in combination. In addition, a thickening binder such as carboxymethyl cellulose may be used in combination. The quantity of the binder may be 2 mass% or more and 10 mass% or less of the entire mixture.

The positive electrode 111 and the negative electrode 112 can be manufactured in accordance with the general manufacturing method for an electrode for a lithium-ion secondary battery. These can be manufactured through, for example, a mixture preparing step of preparing an electrode mixture by mixing an active material, a conductive material, a binder, and the like in s solvent, a mixture applying step of forming an electrode mixture layer by applying the prepared electrode mixture on a base material such as a current collector and then drying the electrode mixture, and a molding step of press-molding the electrode mixture layer.

In the mixture preparing step, for example, the materials can be mixed by, for example, a suitable mixing device such as a planetary mixer, a dispersion mixer, or a planetary centrifugal mixer. Examples of the solvent include N-methylpyrrolidone, water, N,N-dimethylformamide, N,N-dimethylacetoamide, methanol, ethanol, propanol, isopropanol, ethylene glycol, diethylene glycol, glycerin, dimethyl sulfoxide, and tetrahydrofuran.

The electrode mixture (positive electrode mixture slurry) can be applied properly when the viscosity thereof is in the range of 100 to 500 mPa·s. From the viewpoint of safe production, it is important that the variation in viscosity after the slurry is formed is small. The viscosity varies mainly when the alkali component eluted from the positive electrode active material polymerizes the binder to make it gel. When the positive electrode active material that can suppress this gelation is determined, the change quantity of the viscosity of the slurry is suitably used as the index. That is to say, when the viscosity of the slurry on the day when the positive electrode mixture slurry is manufactured is η0 and the viscosity of the positive electrode mixture slurry after the positive electrode mixture slurry is left at rest for five days after the date of manufacture is η5, η5/η0 is preferably 0.80 or more and 1.2 or less.

In the mixture applying step, the prepared electrode mixture in the slurry form can be applied using, for example, a suitable application device such as a bar coater, a doctor blade, and a roll transferring machine. The applied electrode mixture can be dried using, for example, a drying device such as a hot air heating device or a radiation heating device.

In the molding step, the electrode mixture layer can be press-molded using, for example, a suitable pressing device such as a roll press. The positive electrode mixture layer 111b can have a thickness of, for example, about 100 µm or more and 300 µm or less. The negative electrode mixture layer 112b can have a thickness of, for example, about 20 µm or more and 150 µm or less. By cutting the press-molded electrode mixture layer together with the positive electrode current collector as necessary, the electrode for a lithium-ion secondary battery with a desired shape can be obtained.

As illustrated in Fig. 2, the wound electrode group 110 can be formed by winding the positive electrode 111 and the negative electrode 112 with a band shape with a separator 113 held therebetween. The wound electrode group 110 is wound around a core formed of polypropylene, polyphenylene sulfide, or the like and housed inside the battery can 101, for example.

As the separator 113, a microporous film of polyolefin resin such as polyethylene, polypropylene, or polyethylene-polypropylene copolymer, polyamide resin, aramid resin, or the like, or such a microporous film having a surface thereof covered with a heat-resistant material such as an alumina particle can be used.

As illustrated in Fig. 2, the positive electrode current collector 111a is electrically connected to the battery lid 102 through a positive electrode lead piece 103. On the other hand, the negative electrode current collector 112a is electrically connected to a bottom part of the battery can 101 through a negative electrode lead piece 104. Between the wound electrode group 110 and the battery lid 102 and between the wound electrode group 110 and the bottom part of the battery can 101, an insulating plate 105 for preventing the short-circuiting is disposed. The positive electrode lead piece 103 and the negative electrode lead piece 104 are formed of the material similar to that of the positive electrode current collector 111a and the negative electrode current collector 112a, and bonded respectively to the positive electrode current collector 111a and the negative electrode current collector 112a by spot welding, ultrasonic welding, or the like.

Inside the battery can 101, a nonaqueous electrolyte solution is poured. The nonaqueous electrolyte solution may be poured by a method of directly pouring the nonaqueous electrolyte solution with the battery lid 102 open, or by a method of pouring the nonaqueous electrolyte solution through an inlet of the battery lid 102 with the battery lid 102 closed. The battery can 101 is sealed in a manner that the battery lid 102 is stabilized by calking or the like. Between the battery can 101 and the battery lid 102, a sealing material 106 made of a resin material with an insulating property is held, so that the battery can 101 and the battery lid 102 are electrically insulated from each other.

The nonaqueous electrolyte solution is composed so as to include an electrolyte and a nonaqueous solvent. Examples of the electrolyte include various lithium salts such as LiPF₆, LiBF₄, and LiClO₄. Examples of the nonaqueous solvent include chain carbonate such as dimethyl carbonate, diethyl carbonate, and ethylmethyl carbonate, cyclic carbonate such as ethylene carbonate, propylene carbonate, and vinylene carbonate, chain carboxylate ester such as methyl acetate, ethylmethyl carbonate, and methylpropyl carbonate, cyclic carboxylate ester such as γ-butyrolactone and γ-valerolactone, and ethers. The concentration of the electrolyte is, for example, 0.6 M or more and 1.8 M or less.

To the nonaqueous electrolyte solution, various additives can be added for the purpose of suppressing oxidizing or reducing decomposition of the electrolyte solution, preventing the separation of the metal element, improving the ion conductivity, improving the flame retardance, and so on. Examples of the additive include organic phosphorus compounds such as trimethyl phosphate and trimethyl phosphite, organic sulfur compounds such as 1,3-propane sultone and 1,4-butane sulfone, carboxylic anhydrides such as polyadipic anhydride and hexahydrophthalate anhydrate, and boron compounds such as trimethyl borate and lithium bisoxalate borate.

In the lithium-ion secondary battery 100 with the above structure, the battery lid 102 is used as a positive electrode external terminal and the bottom part of the battery can 101 is used as a negative electrode external terminal, and the power supplied from the outside can be stored in the wound electrode group 110. The power stored in the wound electrode group 110 can be supplied to an external device or the like. Note that this lithium-ion secondary battery 100 has a cylindrical shape. However, the shape and the battery structure of the lithium-ion secondary battery are not limited in particular, and the shape may be any of suitable shapes including rectangular, button, and laminate sheet shapes, and the battery structure may be another battery structure.

The lithium-ion secondary battery according to the present embodiment can be used in various applications. Examples of the application may be small power sources for mobile electronic appliances, home-use electric appliances, and the like, stationary power sources for power storage devices, uninterruptible power supply devices, power leveling devices, and the like, and driving power sources for ships, railway vehicles, hybrid railway vehicles, hybrid automobiles, electric vehicles, and the like; however, the applications are not limited to these examples. The lithium transition metal composite oxide has the high nickel content, the high discharge capacity, and the excellent charge and discharge cycle characteristic. Therefore, the aforementioned lithium transition metal composite oxide can be particularly suitably used for a small power source or on-vehicle purposes for which the high energy density and long life are required.

The chemical composition of the positive electrode active material used for a lithium-ion secondary battery can be checked by decomposing the battery, extracting the positive electrode active material in the positive electrode, and performing high-frequency inductively coupled plasma spectrometry or atomic absorption spectrometry, for example. Since the composition ratio of lithium (1 + a in Composition Formula (1)) depends on the charging state, the chemical composition of the positive electrode active material can be determined based on whether the coefficient a of lithium after charging and discharging satisfies -0.9 ≤ a ≤ 0.04.

### Examples

Positive electrode active materials according to Examples of the present invention were synthesized, and the composition, the residual alkali quantity, the discharge capacity, and the charge and discharge cycle characteristic (capacity retention) were evaluated. For comparison to Examples, positive electrode active materials according to Comparative examples with the different chemical compositions were synthesized and the similar evaluation was performed.

Examples and Comparative examples are hereinafter described and the present invention is described more specifically. However, the technical range of the present invention is not limited thereto.

### (Examples 1 to 19)

A positive electrode active material according to Example 1 was manufactured. As the raw material, lithium carbonate, nickel hydroxide, cobalt carbonate, and manganese carbonate were prepared. The raw materials were weighed so that the molar ratio of the metal elements satisfied Li:Ni:Co:Mn = 1.04:0.80:0.15:0.05, and pure water was added thereto so that the solid content ratio became 50 mass%. By performing wet pulverizing (wet mixing) in a crusher, a raw material slurry was prepared (mixing step S10). The raw material slurry had an average particle diameter D₅₀ of 0.15 µm.

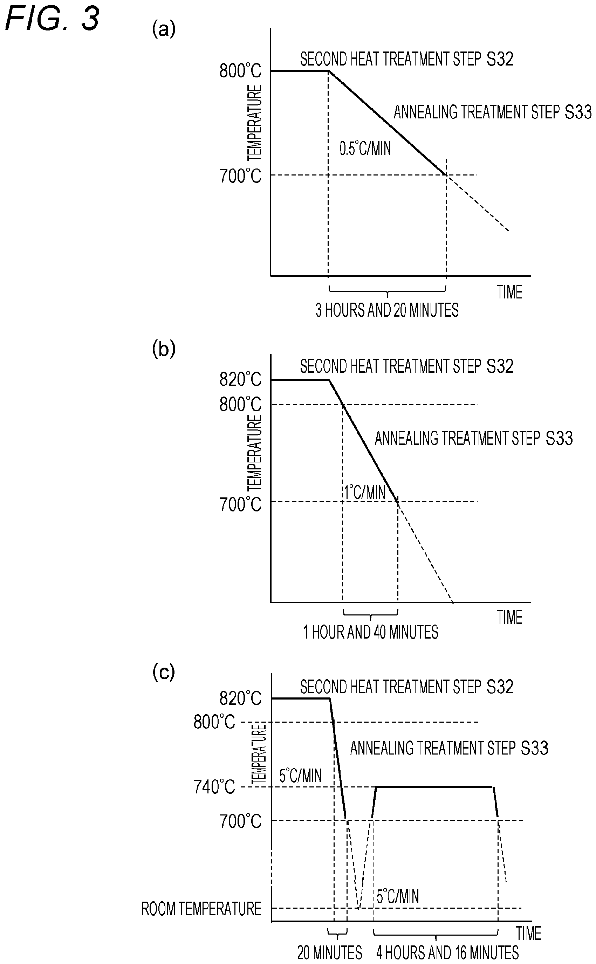

The raw material slurry obtained through the mixing step was sprayed and dried using a nozzle type spray drier (ODL-20 type, manufactured by OHKAWARA KAKOHKI CO., LTD.) with a spray pressure of 0.21 MPa and a spray quantity of 260 g/min, and thus, a granular body was obtained (granulating step S20). The granular body had an average particle diameter D₅₀ of 12 µm. By calcinating the granular body, lithium transition metal composite oxide was obtained (calcinating step S30). In the calcinating step, specifically, the granular body was heated (temporarily calcinated) at 650°C for 6 hours in the oxygen flow in a rotary kiln of which the atmosphere was substituted with the oxygen gas atmosphere, and thus, the first precursor was obtained (first heat treatment step S31). The CO₂ concentration in the exhaust gas of the rotary kiln was 8500 ppm at maximum. After that, the first precursor was heated (calcinated regularly) at 800°C for 10 hours in the oxygen flow in a tunnel furnace of which the atmosphere was substituted with the oxygen gas atmosphere (second heat treatment step S32). The CO₂ concentration in the exhaust gas in the tunnel furnace in the second heat treatment step S32 was 200 ppm at maximum. Subsequently, the temperature was decreased from 800°C with adjustment so that the temperature was decreased to 700°C at a temperature decreasing speed of 0.5 °C/min, and by keeping the temperature band from 800°C to 700°C (performing annealing) for 3 hours 20 minutes, lithium transition metal composite oxide was obtained (annealing treatment step S33). The CO₂ concentration in the exhaust gas in the tunnel furnace in the annealing treatment step S33 was 40 ppm at maximum. Fig. 3(a) is an annealing treatment step diagram expressing the temperature decrease band along a vertical axis and the temperature decrease time along a horizontal axis.

The calcinated powder obtained by calcination was classified with a sieve with an opening size of 53 µm and the sieved powder was used as the positive electrode active material of a sample.

The chemical composition of Li:Ni:Co:Mn of the obtained positive electrode active material was confirmed to be 1.03:0.80:0.15:0.05 by the measurement in accordance with the high-frequency inductively coupled plasma spectrometry. Moreover, α in the positive electrode active material obtained in Example 1 was measured by the inert gas fusion-infrared absorption method and confirmed to satisfy -0.2< α < 0.2. In Examples subsequent to Example 2, α was also confirmed to satisfy -0.2< α < 0.2.

In Example 2, titanium oxide was added as the raw material and the raw materials were weighed so that the molar ratio satisfied Li:Ni:Co:Mn:Ti = 1.04:0.80:0.04:0.15:0.01, and the regular calcinating temperature was set to 820°C. The annealing time was the time in the temperature band of 700°C or more and 800°C or less, and was 3 hours and 20 minutes. The other process was similar to that of Example 1 and thus, the positive electrode active material was obtained.

In Example 3, titanium oxide was added as the raw material, and the raw materials were weighed so that the molar ratio satisfied Li:Ni:Co:Mn:Ti = 1.05:0.80:0.15:0.04:0.01. The other process was similar to that of Example 1 and thus, the positive electrode active material was obtained.

In Example 4, titanium oxide was added as the raw material, and the raw materials were weighed so that the molar ratio satisfied Li:Ni:Co:Mn:Ti = 0.97:0.80:0.15:0.04:0.01. The other process was similar to that of Example 1 and thus, the positive electrode active material was obtained.

In Example 5, titanium oxide was added as the raw material, the raw materials were weighed so that the molar ratio satisfied Li:Ni:Co:Mn:Ti = 1.03:0.85:0.03:0.10:0.02, the temporary calcinating temperature was set to 700°C, and the regular calcinating temperature was set to 820°C. Therefore, the annealing time was 3 hours and 20 minutes. The other process was similar to that of Example 1 and thus, the positive electrode active material was obtained. Note that the maximum CO₂ concentration in the temporary calcination was 11000 ppm, the maximum CO₂ concentration in the regular calcination was 160 ppm, and the maximum CO₂ concentration in the annealing was 50 ppm.

In Example 6, titanium oxide was added as the raw material, the raw materials were weighed so that the molar ratio satisfied Li:Ni:Co:Mn:Ti = 1.03:0.85:0.03:0.10:0.02, the temporary calcinating temperature was set to 700°C, and the regular calcinating temperature was set to 820°C. Moreover, adjustment was performed so that the temperature was decreased to 700°C at a temperature decreasing speed of 1.0 °C/min, and the annealing time in the temperature band from 700°C or more and 800°C or less was 1 hour and 40 minutes. The other process was similar to that of Example 1 and thus, the positive electrode active material was obtained. Note that Fig. 3(b) is an annealing treatment step diagram.

In Example 7, titanium oxide was added as the raw material, the raw materials were weighed so that the molar ratio satisfied Li:Ni:Co:Mn:Ti = 1.03:0.85:0.03:0.10:0.02, the temporary calcinating temperature was set to 700°C, and the regular calcinating temperature was set to 820°C. Moreover, adjustment was performed so that the temperature was decreased to 700°C at a temperature decreasing speed of 0.25 °C/min, and the annealing time in the temperature band from 700°C or more and 800°C or less was 6 hours and 40 minutes. The other process was similar to that of Example 1 and thus, the positive electrode active material was obtained.

In Example 8, titanium oxide was added as the raw material, the raw materials were weighed so that the molar ratio satisfied Li:Ni:Co:Mn:Ti = 1.03:0.85:0.03:0.10:0.02, the temporary calcinating temperature was set to 700°C, and the regular calcinating temperature was set to 820°C. The temperature was decreased once to room temperature at 5 °C/min. After that, the temperature was increased to 740°C at 5 °C/min, kept at 740°C for 4 hours, and decreased to room temperature at 5 °C/min again. Therefore, the total annealing time in the temperature band of 700°C or more and 800°C or less was 4 hours and 36 minutes. The other process was similar to that of Example 1 and thus, the positive electrode active material was obtained. Note that Fig. 3(c) is an annealing treatment step diagram.

In Example 9, titanium oxide was added as the raw material, the raw materials were weighed so that the molar ratio satisfied Li:Ni:Co:Mn:Ti = 1.03:0.85:0.03:0.10:0.02, the temporary calcinating temperature was set to 700°C, and the regular calcinating temperature was set to 820°C. The temperature was decreased once to 780°C at 5 °C/min, and kept at 780°C for 4 hours, and decreased to room temperature at 5 °C/min again. Therefore, the total annealing time in the temperature band of 700°C or more and 800°C or less was 4 hours and 20 minutes. The other process was similar to that of Example 1 and thus, the positive electrode active material was obtained.

In Example 10, cobalt carbonate was omitted and titanium oxide was added as the raw material, the raw materials were weighed so that the molar ratio satisfied Li:Ni:Mn:Ti = 1.03:0.85:0.13: 0.02, the temporary calcinating temperature was set to 700°C, and the regular calcinating temperature was set to 840°C. The other process was similar to that of Example 1 and thus, the positive electrode active material was obtained. Therefore, the total annealing time in the temperature band of 700°C or more and 800°C or less was 3 hours and 20 minutes.

In Example 11, titanium oxide was added as the raw material, the raw materials were weighed so that the molar ratio satisfied Li:Ni:Co:Mn:Ti = 1.03:0.90:0.03:0.05:0.02, the temporary calcinating temperature was set to 700°C, and the regular calcinating temperature was set to 840°C. The other process was similar to that of Example 1 and thus, the positive electrode active material was obtained. Therefore, the annealing time was 3 hours and 20 minutes. Note that the maximum CO₂ concentration in the temporary calcination was 10000 ppm, the maximum CO₂ concentration in the regular calcination was 110 ppm, and the maximum CO₂ concentration in the annealing was 30 ppm.

In Example 12, cobalt carbonate was omitted and titanium oxide was added as the raw material, the raw materials were weighed so that the molar ratio satisfied Li:Ni:Mn:Ti = 1.03:0.90:0.08: 0.02, the temporary calcinating temperature was set to 700°C, and the regular calcinating temperature was set to 840°C. The other process was similar to that of Example 1 and thus, the positive electrode active material was obtained. Therefore, the total annealing time was 3 hours and 20 minutes.

In Example 13, titanium oxide was added as the raw material, the raw materials were weighed so that the molar ratio satisfied Li:Ni:Co:Mn:Ti = 1.03:0.94:0.02:0.02:0.02, the temporary calcinating temperature was set to 740°C, and the regular calcinating temperature was set to 860°C. The other process was similar to that of Example 1 and thus, the positive electrode active material was obtained. Therefore, the total annealing time was 3 hours and 20 minutes.

In Example 14, manganese carbonate was omitted and aluminum oxide was added as the raw material, the raw materials were weighed so that the molar ratio satisfied Li:Ni:Co:Al = 1.03:0.90:0.07: 0.03, the temporary calcinating temperature was set to 700°C, and the regular calcinating temperature was set to 820°C. The other process was similar to that of Example 1 and thus, the positive electrode active material was obtained. Therefore, the total annealing time was 3 hours and 20 minutes.

In Example 15, aluminum oxide was added as the raw material, the raw materials were weighed so that the molar ratio satisfied Li:Ni:Co:Mn:AI = 1.03:0.90:0.03:0.02:0.05, the temporary calcinating temperature was set to 700°C, and the regular calcinating temperature was set to 840°C. The other process was similar to that of Example 1 and thus, the positive electrode active material was obtained. Therefore, the annealing time was 3 hours and 20 minutes.

In Example 16, gallium oxide was added as the raw material, the raw materials were weighed so that the molar ratio satisfied Li:Ni:Co:Mn:Ga = 1.03:0.90:0.03:0.05:0.02, the temporary calcinating temperature was set to 700°C, and the regular calcinating temperature was set to 840°C. The other process was similar to that of Example 1 and thus, the positive electrode active material was obtained. Therefore, the annealing time was 3 hours and 20 minutes.

In Example 17, magnesium oxide was added as the raw material, the raw materials were weighed so that the molar ratio satisfied Li:Ni:Co:Mn:Mg = 1.03:0.90:0.03:0.06:0.01, the temporary calcinating temperature was set to 700°C and the regular calcinating temperature was 840°C. The other process was similar to that of Example 1 and thus, the positive electrode active material was obtained. Therefore, the annealing time was 3 hours and 20 minutes.

In Example 18, zirconium oxide was added as the raw material, the raw materials were weighed so that the molar ratio satisfied Li:Ni:Co:Mn:Zr = 1.03:0.90:0.03:0.05:0.02, the temporary calcinating temperature was set to 700°C, and the regular calcinating temperature was set to 840°C. The other process was similar to that of Example 1 and thus, the positive electrode active material was obtained. Therefore, the annealing time was 3 hours and 20 minutes.

In Example 19, zinc oxide was added as the raw material, the raw materials were weighed so that the molar ratio satisfied Li:Ni:Co:Mn:Zn = 1.03:0.90:0.03:0.05:0.02, the temporary calcinating temperature was set to 700°C, and the regular calcinating temperature was set to 840°C. The other process was similar to that of Example 1 and thus, the positive electrode active material was obtained. Therefore, the annealing time was 3 hours and 20 minutes.

### (Comparative examples 1 to 3)

The annealing treatment was substantially omitted in Comparative example 1. After the regular calcination, the temperature was decreased to room temperature at 5 °C/min. The other process was similar to that of Example 1 and thus, positive electrode active materials were obtained. The time for which the temperature band of 700°C or more and 800°C or less was kept after the temperature was decreased from the maximum temperature in the regular calcination was 20 minutes. Note that the maximum CO₂ concentration in the temporary calcination was 8600 ppm, the maximum CO₂ concentration in the regular calcination was 210 ppm, and the maximum CO₂ concentration in the annealing was 20 ppm.

In Comparative example 2, the annealing time was shortened. Titanium oxide was added as the raw material, and the raw materials were weighed so that the molar ratio satisfied Li:Ni:Co:Mn:Ti = 1.03:0.85:0.03:0.10:0.02, the temporary calcinating temperature was set to 700°C, and the regular calcinating temperature was set to 820°C. After the regular calcination, the temperature was decreased to room temperature at 2 °C/min. Therefore, the annealing time was 50 minutes. The other process was similar to that of Example 1 and thus, the positive electrode active material was obtained. Note that the maximum CO₂ concentration in the temporary calcination was 11000 ppm, the maximum CO₂ concentration in the regular calcination was 160 ppm, and the maximum CO₂ concentration in the annealing was 20 ppm.

The annealing treatment was substantially omitted and the calcinated powder was washed with water in Comparative example 3. Titanium oxide was added as the raw material, the raw materials were weighed so that the molar ratio satisfied Li:Ni:Co:Mn:Ti = 1.03:0.90:0.03:0.05:0.02, the temporary calcinating temperature was set to 700°C, and the regular calcinating temperature was set to 840°C. After the regular calcination, the temperature was decreased to room temperature at 5 °C/min. Therefore, the annealing time was 20 minutes. Pure water was added to the obtained calcinated powder so that the mass ratio satisfied the calcinated powder/pure water = 2/1, the mixture was stirred for 1 minute, and the powder was collected by filtration. The obtained powder was dried in vacuum at 80°C for 12 hours and further at 240°C for 12 hours; thus, the positive electrode active material was obtained.

### (Measurement of chemical composition of positive electrode active material)

The chemical composition of the synthesized positive electrode active material was analyzed using ICP-AES spectrometer "OPTIMA 8300" (manufactured by Perkin Elmer). The results indicate that the positive electrode active materials according to Examples 1 to 19 and the positive electrode active materials according to Comparative examples 1 to 3 have the chemical compositions shown in Table 1-1.

### (Compression of positive electrode active material)

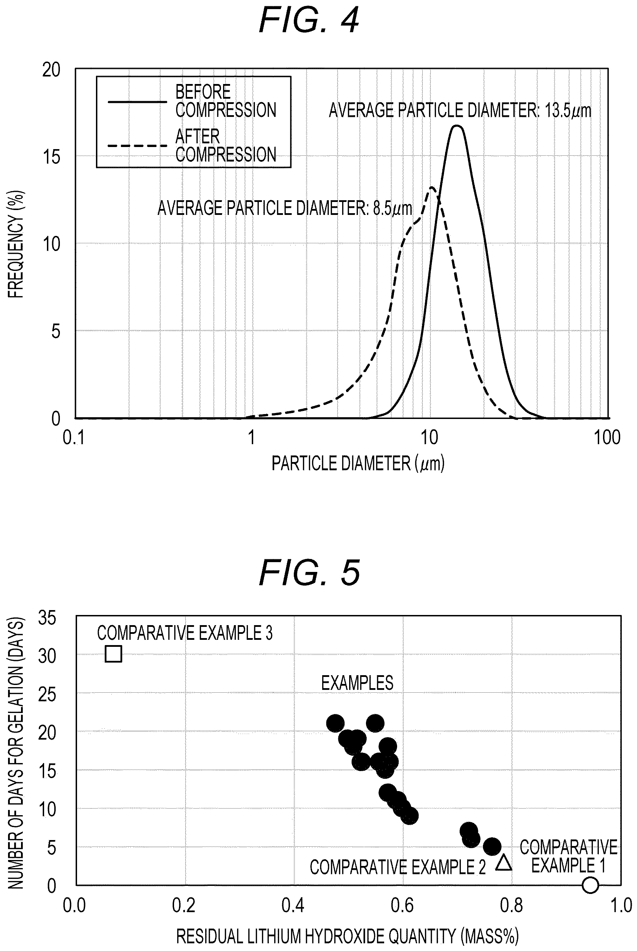

In the positive electrode active material in the positive electrode mixture slurry, a part of the secondary particle was destroyed with the shear applied in the process of adjustment in the mixture applying step. Therefore, the state of the positive electrode active material in the positive electrode mixture slurry was simulated with the load applied on the positive electrode active material. After 1 g of the positive electrode powder was put into a dice with an area of 0.49 cm², the powder was compressed with a load of 8 kN, that is, a pressure of 160 MPa (≅ 16,327 N/cm²) per unit area using an autograph device "AGS-1kNX" (manufactured by Shimadzu Corporation), and thus, the positive electrode active material was collected. Fig. 4 illustrates the grain size distribution of the positive electrode active material before and after the compression in Example 1. Before the compression, the average particle diameter was 13.5 µm. On the other hand, after the compression, the particles with a size of less than 5 µm, which did not exist before the compression, increased and the average particle diameter became 8.5 µm.

### (Neutralization titration)

The residual alkali component of the positive electrode active material was measured in accordance with the following procedure using an automatic titration device "COM-1700A" (manufactured by HIRANUMA Co., Ltd.). Into 30 ml of pure water, 0.5 g of the positive electrode powder was input and the atmosphere in the container was substituted with Ar. After that, the Li component was extracted by stirring for one hour, and by suction filtration, an extraction liquid was obtained. The obtained extraction liquid for 25 ml was diluted with pure water to about 40 ml, and using 0.02-M chloric acid, the titration was carried out. Thus, the quantities of the lithium carbonate component and the lithium hydroxide component in the extraction liquid were analyzed. The titration curve had two stages of peaks, and the titration quantity between the equivalence point in the first stage and the equivalence point in the second stage was used as the quantity of lithium carbonate and the quantity obtained by subtracting the quantity of lithium carbonate from the titration quantity to the equivalence point in the first stage was used as the quantity of lithium hydroxide.

The residual lithium hydroxide quantity L1 (mass%) in the positive electrode active material calculated by the aforementioned neutralization titration and the residual lithium hydroxide quantity L2 (mass%) calculated by the neutralization titration after the positive electrode active material was compressed as described above were measured and the ratio of L2 to L1, that is, L2/L1 was obtained. The results are shown in Table 1-2.

### (Raman spectrum)

The Raman spectrum of the positive electrode active material in the range of 413 × 373 µm was acquired under the condition of a wavelength of 532 nm and a diameter of 0.36 µm using a laser Raman spectroscope "RAMAN force" (manufactured by Nanophoton). Using the acquired spectrum, the half width (cm⁻¹) of the vibration peak of E_{g} and A_{1g} was calculated through fitting analysis based on Lorentzian distribution function. The results are shown in Table 1-2.

### (Gelation resistance)

The positive electrode active material, the carbon conductive material, and the binder (PVdF) dissolved in advance in N-methyl-2-pyrrolidone (NMP) were weighed at a mass ratio of 96:2:2, and using a kneader "HIVIS MIX 2P-03" (manufactured by PRIMIX Corporation), the positive electrode mixture slurry was manufactured. The viscosity of the obtained positive electrode mixture slurry was measured with a rotation number of 0.5 rpm using a B-type viscometer "TVB10" (manufactured by Toki Sangyo Co.,Ltd). In addition, the positive electrode mixture slurry was put in a plastic container and left at rest at 25°C in the 50-%RH air atmosphere and the viscosity was measured every day. In this manner, the viscosity of the positive electrode mixture slurry of which the positive electrode active material ratio was 96% or more was measured.

The resistance against gelation (days) was the number of days for which the ratio (ηd/η0) of the viscosity ηd of the positive electrode mixture slurry that was left at rest for d days after the day the slurry was manufactured to the viscosity η0 of the positive electrode mixture slurry on the day when the slurry was manufactured was kept 0.80 or more and 1.2 or less. The results are shown in Table 1-2. Regarding Example 1, Example 5, and Example 11 as representative examples with different gelation resistances, the ratio (η5/η0) of the viscosity η5 of the positive electrode mixture slurry that was left at rest for five days after the day the slurry was manufactured to the viscosity η0 of the positive electrode mixture slurry on the day when the slurry was manufactured is also shown in Table 1-2.

### (Discharge capacity, capacity retention)

A lithium-ion secondary battery was manufacturing using the synthesized positive electrode active material as the material of the positive electrode. After that, the discharge capacity and the capacity retention of the lithium-ion secondary battery were obtained.

First, the positive electrode mixture slurry that was uniformly mixed was applied on a positive electrode current collector of an aluminum foil with a thickness of 20 µm so that the application quantity became 10 mg/cm². Next, the positive electrode mixture slurry applied on the positive electrode current collector was heated at 120°C and the solvent is distilled away, and thus, the positive electrode mixture layer was formed. After that, the positive electrode mixture layer was press-molded with hot pressing, and punched into a circular shape with a diameter of 15 mm, and thus, the positive electrode was obtained.

Subsequently, the lithium-ion secondary battery was manufactured using the manufactured positive electrode, a negative electrode, and a separator. As the negative electrode, metal lithium punched into a circular shape with a diameter of 16 mm was used. As the separator, a porous separator with a thickness of 30 µm made of polypropylene was used. The positive electrode and the negative electrode were disposed to face each other with the separator held therebetween in a nonaqueous electrolyte solution and thus, the lithium-ion secondary battery was assembled. As the nonaqueous electrolyte solution, a solution in which LiPF₆ was dissolved at 1.0 mol/L in a solvent in which ethylene carbonate and dimethyl carbonate were mixed at a volume ratio of 3:7 was used.

The manufactured lithium-ion secondary battery was charged in a 25-°C environment at constant current and constant voltage with an upper limit potential of 4.3 V and 40 A/kg based on the mass of the positive electrode mixture. Then, at the constant current of 40 A/kg based on the mass of the positive electrode mixture, the lithium-ion secondary battery was discharged until a lower limit potential of 2.5 V and the discharge capacity (initial capacity) was measured. Subsequently, the lithium secondary battery with the initial capacity measured was charged in a 25-°C environment at constant current and constant voltage with an upper limit potential of 4.3 V and 100 A/kg based on the mass of the positive electrode mixture. Then, at the constant current of 100 A/kg based on the mass of the positive electrode mixture, the lithium-ion secondary battery was discharged until a lower limit potential of 2.5 V, and this cycle was carried out 100 times in total, and the discharge capacity after 100 cycles was measured. The percentage of the discharge capacity after 100 cycles with respect to the initial capacity was calculated as the capacity retention.

The discharge capacity (Ah/kg) and the 100-cycle capacity retention (%) measured as above are shown in Table 1-2.

**[Table 1-1]**

| | Chemical composition (measurement value) Li₁₊ₐNi_{b}Co_{c}M_{d}XₑO₂ | | | | | | | | | | | First heat treatment step | | Second heat treatment step | | Annealing treatment step | |
|---|---|---|---|---|---|---|---|---|---|---|---|---|---|---|---|---|---|
| | Li | Ni | Co | Al | Mn | Ti | Ga | | Mg | Zr | Zn | Heat treatment temperature | Maximum CO₂ concentration | Heat treatment temperature | Maximum CO2 concentration | Annealing time | Maximum CO2 concentration |
| | (1+a) | (b) | (c) | (d) | | (e) | | | | | | [°C] | [ppm] | [°C] | [ppm] | [hh:mm] | [ppm] |
| Example 1 | 1.03 | 0.80 | 0.15 | - | 0.05 | - | - | | - | - | - | 650 | 8500 | 800 | 200 | 03:20 | 40 |
| Example 2 | 1.03 | 0.80 | 0.04 | - | 0.15 | 0.01 | - | | - | - | - | 650 | | 820 | | 03:20 | |
| Example 3 | 1.04 | **0.80** | 0.15 | - | 0.04 | **0.01** | - | | - | - | - | 650 | | 800 | | 03:20 | |
| Example 4 | 0.96 | **0.80** | 0.15 | - | 0.04 | **0.01** | - | | - | - | - | 650 | | 800 | | 03:20 | |
| Example 5 | 1.02 | 0.85 | 0.03 | - | 0.10 | 0.02 | - | | - | - | - | 700 | 11000 | 820 | 160 | 03:20 | 50 |
| Example 6 | 1.02 | 0.85 | 0.03 | - | 0.10 | 0.02 | - | | - | - | - | 700 | | 820 | | 01:40 | |
| Example 7 | 1.02 | 0.85 | 0.03 | - | 0.10 | 0.02 | - | | - | - | - | 700 | | 820 | | 06:40 | |
| Example 8 | 1.02 | 0.85 | 0.03 | - | 0.10 | 0.02 | - | | - | - | - | 700 | | 820 | | 04:36 | |
| Example 9 | 1.02 | 0.85 | 0.03 | - | 0.10 | 0.02 | - | | - | - | - | 700 | | 820 | | 04:20 | |
| Example 10 | 1.02 | 0.85 | | - | 0.13 | 0.02 | - | | - | - | - | 700 | | 840 | | 03:20 | |
| Example 11 | 1.02 | 0.90 | 0.03 | - | 0.05 | 0.02 | - | | - | - | - | 700 | 10000 | 840 | 110 | 03:20 | 30 |
| Example 12 | 1.02 | 0.90 | - | - | 0.08 | 0.02 | - | | - | - | - | 700 | | 840 | | 03:20 | |
| Example 13 | 1.00 | 0.94 | 0.02 | - | 0.02 | 0.02 | - | | - | - | - | 740 | | 860 | | 03:20 | |
| Example 14 | 1.02 | 0.90 | 0.07 | 0.03 | - | - | - | | - | - | - | 700 | | 820 | | 03:20 | |
| Example 15 | 1.02 | 0.90 | 0.03 | 0.02 | 0.05 | - | - | | - | - | - | 700 | | 840 | | 03:20 | |
| Example 16 | 1.02 | 0.90 | 0.03 | - | 0.05 | - | 0.02 | | - | - | - | 700 | | 840 | | 03:20 | |
| Example 17 | 1.02 | 0.90 | 0.03 | - | 0.06 | - | - | | 0.01 | - | - | 700 | | 840 | | 03:20 | |
| Example 18 | 1.02 | 0.90 | 0.03 | - | 0.05 | - | - | | - | 0.02 | - | 700 | | 840 | | 03:20 | |
| Example 19 | 1.02 | 0.90 | 0.03 | - | 0.05 | - | - | | - | - | 0.02 | 700 | | 840 | | 03:20 | |
| Comparative example 1 | 1.03 | 0.80 | 0.15 | - | 0.05 | - | - | | - | - | - | 650 | 8600 | 800 | 210 | **00:20** | 20 |
| Comparative example 2 | 1.02 | 0.85 | 0.03 | - | 0.10 | 0.02 | - | | - | - | - | 700 | 11000 | 820 | 160 | 00:50 | 20 |
| Comparative example 3 | 1.02 | 0.90 | 0.03 | - | 0.05 | 0.02 | - | | - | - | - | 700 | | 840 | | **00:20** | |
| | Blank means non-measurement | | | | | | | | | | | | | | | | |

**[Table 1-2]**

| | Before compression | After compression | Ratio | Eg | A₁g | Gelation **resistance** [Days] | Viscosity of positive electrode mixture slurry | | | Discharge capacity [Ah/kg] | 100 cycles Capacity retention [%] |
|---|---|---|---|---|---|---|---|---|---|---|---|
| | L1 | L2 | L2/L1 | Half width | Half width | | η0 | η5 | η5/η0 | | |
| | [mass%] | [mass%] | - | [cm⁻¹] | [cm⁻¹] | | [Pa·s] | [Pa·s] | | | |
| Example 1 | 0.764 | 0.810 | 1.06 | 67.3 | 49.6 | 5 | 135 | 162 | 1.20 | 195 | 93 |
| Example 2 | 0.612 | 0.657 | 1.07 | | | 9 | | | | 192 | 97 |
| Example 3 | 0.725 | 0.788 | 1.09 | | | 6 | | | | 196 | 96 |
| Example 4 | 0.598 | 0.642 | 1.07 | | | 10 | | | | 191 | 93 |
| Example 5 | 0.575 | 0.593 | 1.03 | 66.1 | 48.5 | 16 | 125 | 130 | 1.04 | 198 | 95 |
| Example 6 | 0.590 | 0.628 | 1.06 | | | 11 | | | | 198 | 95 |
| Example 7 | 0.549 | 0.560 | 1.02 | | | 21 | | | | 201 | 95 |
| Example 8 | 0.567 | 0.586 | 1.03 | | | 15 | | | | 197 | 94 |
| Example 9 | 0.572 | 0.590 | 1.03 | | | 18 | | | | 199 | 95 |
| Example 10 | 0.523 | 0.545 | 1.04 | | | 16 | | | | 196 | 97 |
| Example 11 | 0.476 | 0.488 | 1.03 | 65.8 | 48.0 | 21 | 126 | 130 | 1.03 | 204 | 92 |
| Example 12 | 0.516 | 0.534 | 1.03 | | | 19 | | | | 202 | 95 |
| Example 13 | 0.721 | 0.779 | 1.08 | | | 7 | | | | 211 | 90 |
| Example **14** | 0.587 | 0.621 | 1.06 | | | 11 | | | | 206 | 93 |
| Example 15 | 0.524 | 0.534 | 1.02 | | | 16 | | | | 200 | 96 |
| Example 16 | 0.556 | 0.591 | 1.06 | | | 16 | | | | 198 | 92 |
| Example 17 | 0.498 | 0.513 | 1.03 | | | 19 | | | | 196 | 96 |
| Example 18 | 0.509 | 0.527 | 1.04 | | | 18 | | | | 201 | 95 |
| Example 19 | 0.572 | 0.602 | 1.05 | | | 12 | | | | 199 | 90 |
| Comparative example 1 | 0.944 | 1.27 | 1.35 | 70.0 | 52.6 | 0 | Measurement impossible | - | - | 195 | 88 |
| Comparative example 2 | 0.785 | 0.901 | 1.15 | 68.2 | 51.3 | 3 | 137 | - | - | 199 | 90 |
| Comparative example 3 | **0.068** | 0.180 | 2.65 | | | 30 | 122 | 120 | 0.98 | 192 | 79 |
| | Blank means non-measureme nt | | | | | | | | | | |

The results shown in Table 1 are considered below.

First, in Examples 1 to 19, the chemical compositions expressed by Composition Formula (1) were satisfied, the residual lithium hydroxide quantity L1 before the compression was 0.8 mass% or less, and the ratio of the residual lithium hydroxide quantity L2 after the compression in the autograph to L1, that is, L2/L1 was 1.10 or less. As a result, these were kept for five days or more at minimum until the positive electrode mixture slurry became gel, and some were kept for 10 days or more. Thus, it was confirmed that the gelation resistance was excellent. In addition, regarding the electrode characteristic, the discharge capacity generally exhibited a high value over 190 Ah/kg and the capacity retention as high as 90% or more was obtained.

On the other hand, in Comparative example 1 where the annealing treatment was substantially omitted, the residual lithium hydroxide quantity L1 was large and L2/L1 was also high. As a result, gelation took less than one day, and this was inconvenient.

Moreover, in Comparative example 2, the annealing treatment was as short as one hour or less and the residual lithium hydroxide quantity L1 and L2/L1 were a little larger than those in Examples, and the positive electrode mixture slurry became gel in three days. Despite the tolerance difference in the manufacturing process, the gelation resistance of five days or more is usually required, and the results were inconvenient.

Moreover, in Comparative example 3, the annealing treatment was not performed and the residual alkali component was removed by water washing. Therefore, the residual lithium hydroxide quantity L1 was very small and L2/L1 was larger than that in Examples. Here, the gelation of the positive electrode mixture slurry took 30 days and this was excellent; however, the capacity retention was as low as 79%. It is considered that this is because water-washing causes elution of a part of Li in the surface layer of the positive electrode active material in addition to the residual alkali component. In addition, it is considered that this example is inferior in terms of productivity because the water-washing step and the subsequent drying step are added.

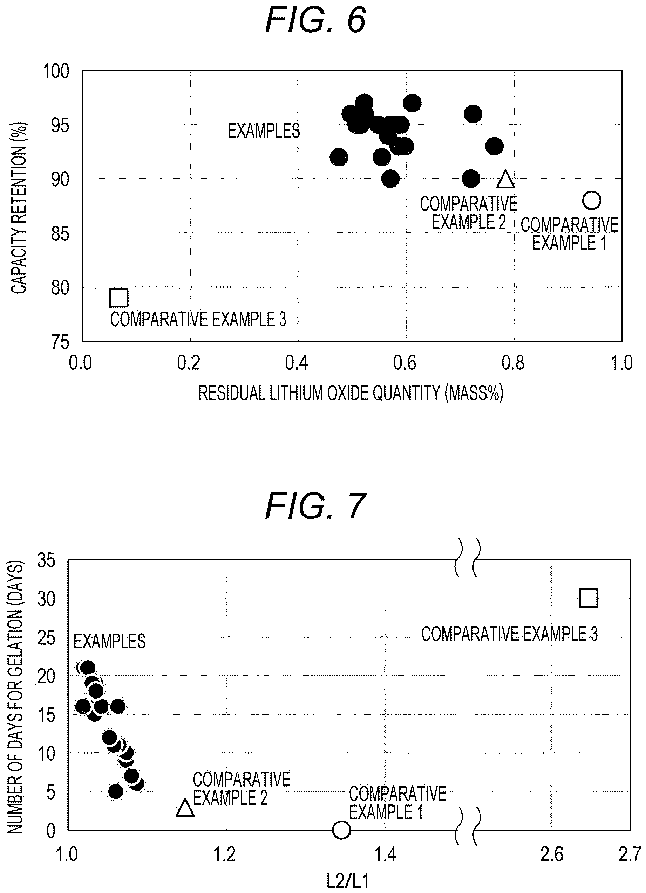

Next, Fig. 5 illustrates the relation between the residual lithium hydroxide quantity and the number of days for gelation, and Fig. 6 illustrate the relation between the residual lithium hydroxide quantity and the capacity retention. As illustrated in Fig. 5 and Fig. 6, the residual lithium hydroxide quantity and the number of days for gelation have a correlation, and the residual lithium hydroxide quantity and the capacity retention have a correlation. That is to say, when the residual lithium hydroxide quantity is 0.8 mass% or less, the gelation takes five days or more and when the residual lithium hydroxide quantity is 0.6 mass% or less, the gelation takes generally 10 days or more. However, as described in Comparative example 2, it may take less than five days to gelate when the residual lithium hydroxide was 0.8 mass% or less. It is considered that this is because a part of the residual lithium hydroxide reacts with CO₂ gas in the air while the positive electrode active material is handled in the air, so that the residual lithium hydroxide is modified into lithium carbonate. In such a case, the result of measuring the residual lithium hydroxide ratio L2/L1 before and after the compression is over 1.10. In order to evaluate the gelation resistance, it is important to manage not just the residual lithium hydroxide but also L2/L1. Moreover, when the residual lithium hydroxide quantity is 0.8 mass% or less, the capacity retention is 90% or more at the same time. Note that at this time, the discharge capacity exhibits the characteristic of about 190 Ah/Kg or more.

Thus, it is considered that when the residual lithium hydroxide quantity is 0.8 mass% or less, the progress in gelation of the binder is suppressed and the positive electrode active material with high crystallinity is obtained and the decrease in capacity retention is suppressed. Note that in Comparative example 3, the capacity retention was low though the residual lithium hydroxide quantity was 0.8 mass% or less. It is considered that this is because, as described above, water-washing extracted residual lithium hydroxide and lithium near the surface layer of the positive electrode active material, the crystallinity and the crystal structure stability decreased, and the capacity retention decreased.

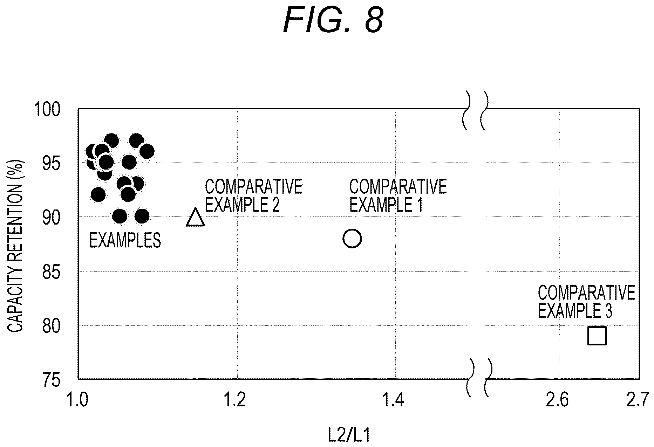

Fig. 7 illustrates the relation between L2/L1 and the number of days for gelation, and Fig. 8 illustrates the relation between L2/L1 and the capacity retention. As illustrated in Fig. 7 and Fig. 8, L2/L1 and the number of days for gelation have a correlation, and L2/L1 and the capacity retention have a correlation. That is to say, when L2/L1 is 1.10 or less, the gelation takes five days or more and the capacity region is 90% or more. Moreover, it is considered that when L2/L1 is 1.10 or less, even if a part of the secondary particles of the positive electrode active material cracks to expose the interface of the inside of the secondary particle newly in the mixture applying step, the increase in residual lithium hydroxide quantity and the decrease in crystallinity are small and the progress in gelation of the binder and the decrease in capacity are suppressed.

### LIST OF REFERENCE SIGNS

- 100: Lithium-ion secondary battery
- 101: Battery can
- 102: Battery lid
- 103: Positive electrode lead piece
- 104: Negative electrode lead piece
- 105: Insulating plate
- 106: Sealing material
- 110: Wound electrode group
- 111: Positive electrode
- 111a: Positive electrode current collector
- 111b: Positive electrode mixture layer
- 112: Negative electrode
- 112a: Negative electrode current collector
- 112b: Negative electrode mixture layer
- 113: Separator

## Claims

1. A positive electrode active material for a lithium-ion secondary battery, comprising lithium transition metal composite oxide expressed by Composition Formula (1):
Li₁₊ₐNi_{b}Co_{c}M_{d}XₑO_{2+α} (1)
[in which M represents at least one kind selected from Al and Mn, X represents one or more kinds of metal elements other than Li, Ni, Co, Al, and Mn, and a, b, c, d, e, and α are numerals satisfying -0.04 ≤ a ≤ 0.04, 0.80 ≤ b ≤ 1.0, 0 ≤ c ≤ 0.15, 0 ≤ d ≤ 0.20, 0 ≤ e ≤ 0.05, b + c + d + e = 1, and -0.2 < α < 0.2], wherein
a residual lithium hydroxide quantity (L1) in the positive electrode active material calculated by neutralization titration is 0.8 mass% or less, and
a ratio of a residual lithium hydroxide quantity (L2) calculated by the neutralization titration after the positive electrode active material is compressed with a pressure of 160 MPa to L1, that is, L2/L1 is 1.10 or less.

2. The positive electrode active material for a lithium-ion secondary battery according to claim 1, wherein the residual lithium hydroxide quantity (L1) in the positive electrode active material calculated by the neutralization titration is 0.6 mass% or less.

3. The positive electrode active material for a lithium-ion secondary battery according to claim 1 or 2, wherein X is one or more elements selected from the group consisting of Ti, Ga, Mg, Zr, and Zn.

4. The positive electrode active material for a lithium-ion secondary battery according to any one of claims 1 to 3, wherein when a positive electrode mixture slurry containing the positive electrode active material for a lithium-ion secondary battery is left at rest for five days after a manufacturing date, a ratio of a viscosity η5 of the positive electrode mixture slurry left at rest for five days after the manufacturing date to a viscosity η0 of the positive electrode mixture slurry on the manufacturing date (η5/η0) is 0.80 or more and 1.2 or less.

5. A manufacturing method for a positive electrode active material for a lithium-ion secondary battery, the positive electrode active material including lithium transition metal composite oxide expressed by Composition Formula (1):
Li₁₊ₐNi_{b}Co_{c}M_{d}XₑO_{2+α} (1)
[in which M represents at least one kind selected from Al and Mn, X represents one or more kinds of metal elements other than Li, Ni, Co, Al, and Mn, and a, b, c, d, e, and α are numerals satisfying -0.04 ≤ a ≤ 0.04, 0.80 ≤ b ≤ 1.0, 0 ≤ c ≤ 0.15, 0 ≤ d ≤ 0.2, 0 ≤ e ≤ 0.05, b + c + d + e = 1, and -0.2 < α < 0.2],
the manufacturing method comprising:
a mixing step of mixing a compound containing the metal elements of Li, Ni, Co, M, and X in Composition Formula (1);
a granulating step of obtaining a granular body from a raw material slurry obtained through the mixing step; and
a calcinating step of calcinating the granular body to obtain lithium transition metal composite oxide expressed by Composition Formula (1), wherein
the calcinating step includes at least two or more heat treatment stages including a first heat treatment step of keeping heat treatment temperature at 600°C or more and less than 750°C and a second heat treatment step of keeping the heat treatment temperature at 750°C or more and 900°C or less,
the calcinating step is a multi-stage heat treatment step including at least the first heat treatment step of keeping the heat treatment temperature at 600°C or more and less than 750°C and the second heat treatment step of keeping the heat treatment temperature at 750°C or more and 900°C or less, and
the calcinating step includes an annealing treatment step of subsequently decreasing the temperature from a maximum temperature and keeping a temperature band of 700°C or more and 800°C or less for 1.5 hours or more.

6. The manufacturing method for a positive electrode active material for a lithium-ion secondary battery according to claim 5, wherein in the calcinating step, a maximum CO₂ concentration of an atmosphere in the second heat treatment step is lower than a maximum CO₂ concentration in the first heat treatment step and a maximum CO₂ concentration in the annealing treatment step is lower than the maximum CO₂ concentration in the second heat treatment step.

7. A lithium-ion secondary battery comprising a positive electrode containing the positive electrode active material for a lithium-ion secondary battery according to any one of claims 1 to 4.
